# EUROPEAN PATENT SPECIFICATION

(11) **EP 4 361 474 B1**
(45) Date of publication and mention of the grant of the patent: **28.10.2026**
(21) Application number: 22827685.3
(22) Date of filing: 24.06.2022
(51) Int. Cl.: F16K 11/085, F16K 11/22, F16K 27/06, F16K 31/04, F16K 31/53, F16K 41/02, F16K 11/20, F16K 11/087

(54) **DRIVER AND CONTROL VALVE**
MITNEHMER UND STEUERVENTIL
APPAREIL D'ENTRAÎNEMENT ET SOUPAPE DE COMMANDE

(30) Priority: 24.06.2021 CN 202110705636; 24.06.2021 CN 202121414376 U; 25.02.2022 CN 202220405860 U; 25.02.2022 CN 202210181970
(43) Date of publication of application: 01.05.2024
(73) Proprietor: Zhejiang Sanhua Automotive Components Co., Ltd., Hangzhou, Zhejiang 310018 (CN)
(72) Inventor: FENG, Zhongbo, Shaoxing, Zhejiang 311835 (CN); WANG, Junjie, Shaoxing, Zhejiang 311835 (CN); WANG, Fugang, Shaoxing, Zhejiang 311835 (CN); SHA, Haijian, Shaoxing, Zhejiang 311835 (CN)
(74) Representative: Maikowski & Ninnemann Patentanwälte Partnerschaft mbB
(86) International application number: PCT/CN2022/101009
(87) International publication number: WO 2022/268193

(56) References cited:
- CN-A- 103 574 094
- CN-A- 106 574 543
- CN-A- 112 302 784
- CN-A- 112 879 601
- CN-U- 212 690 926
- CN-U- 215 928 493
- DE-A1- 102020 207 303
- DE-A9- 102018 009 680
- KR-A- 20210 056 729
- US-A- 4 655 252
- US-A1- 2018 372 235
- US-A1- 2019 024 815

## Description

### CROSS-REFERENCE TO RELATED APPLICATIONS

This application claims priority to Chinese patent application Nos. 202110705636.6, filed on June 24, 2021, and titled "CONTROL VALVE"; 202121414376.9, filed on June 24, 2021, and titled "CONTROL VALVE"; 202210181970.0, filed on February 25, 2022, and titled "DRIVER AND CONTROL VALVE HAVING SAME"; 202220405860.3, filed on February 25, 2022, and titled "DRIVER AND CONTROL VALVE HAVING THE SAME".

### TECHNICAL FIELD

The present invention relates to the field of fluid control technology, and in particular, to a driver and a control valve.

### BACKGROUND

In the technical field of fluid control, multi-channel control valves are used to control a flow path, so that the control valves can form different communication modes. At present, some control valves are relatively simple in structure, but they have fewer communication modes, and a number of communication modes are less than 10, which makes it difficult to meet the needs of more communication modes. Some control valves have more communication modes, but their volume is large, which is not conducive to a miniaturization of control valves.

DE102020207303 A1 discloses a coolant flow control module, according to the preamble of claim 1, comprising a first housing, a first rotor disposed in the first housing, a second housing adjacent to the first housing, and a second rotor disposed within the second housing. The second rotor is engaged with the first rotor, so that the first rotor and the second rotor rotate in unison. An actuator is connected to the first rotor. A plurality of first ports are integrated as part of the first housing and a plurality of second ports are integrated as part of the second housing. The actuator rotates the first rotor and the second rotor to at least one of a plurality of configurations of the coolant flow control module, allowing fluid to flow through the plurality of first ports and the first rotor, and allowing fluid to flow through the plurality of second ports and the second rotor.

### SUMMARY

The invention is set out in the appended set of claims. According to various embodiments of the present application, a driver and a control valve are provided.

The present invention provides a driver and a control valve. The control valve includes a valve body, a first valve core and a first valve core. The valve body is provided with a valve cavity, a plurality of communicating holes are provided in a side wall of the valve body, the plurality of communicating holes penetrate through the side wall of the valve body and are in communication with the valve cavity. The first valve core is rotatably disposed at one end of the valve cavity, the first valve core is provided with a plurality of first passages and a plurality of second passages on a circumferential side of the first valve core. The second valve core is rotatably disposed at the other end of the valve cavity, and the second valve core is coaxially disposed with the first valve core, the second valve core is provided with a third passage. The plurality of communicating holes includes a plurality of first flow channels and a plurality of second flow channels. On a condition that the first valve core is rotated by a first predetermined angle, each of the plurality of first passages is capable of being in communication with corresponding two of the plurality of first flow channels and each of the plurality of second passages is capable of being in communication with corresponding one of the plurality of first flow channels. On a condition that the second valve core is rotated by a second predetermined angle, the third passage is capable of being in communication with one or two of the plurality of second flow channels and the third passage is capable of being correspondingly in communication with the plurality of second passages, so that one of the plurality of first flow channels is correspondingly in communication with one or two of the plurality of second flow channels through the plurality of second passages and the third passage.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those inventions disclosed herein, reference may be made to one or more attached drawings. Additional details or examples used to describe the drawings should not be considered as limiting the scope of any of the disclosed inventions, currently described embodiments and/or examples, and currently understood best modes of these inventions.
FIG. 1 is a first exploded schematic view of a control valve according to an embodiment of the present invention.
FIG. 2 is a second exploded schematic view of a control valve according to an embodiment of the present invention.
FIG. 3 is a sectional view of a control valve according to an embodiment of the present invention.
FIG. 4 is a partial structural schematic of a control valve according to an embodiment of the present invention.
FIG. 5 is a side view of the control valve in FIG.4.
FIG. 6 is a sectional view of the control valve in FIG.4.
FIG. 7 is an exploded schematic view of a valve body according to an embodiment of the present invention.
FIG. 8 is a schematic view of a valve body according to an embodiment of the present invention.
FIG. 9 is a schematic view of a first valve core according to an embodiment of the present invention.

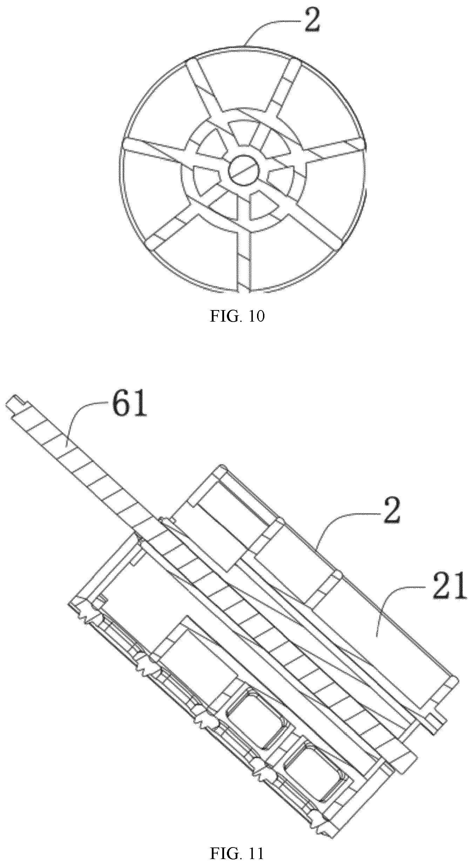

FIG. 10 is a first sectional view of a first valve core according to an embodiment of the present invention.
FIG. 11 is a second sectional view of a first valve core according to an embodiment of the present invention.
FIG. 12 is a schematic view of a sealing gasket according to an embodiment of the present invention.
FIG. 13 is a schematic view of a first valve core connected with a sealing gasket according to an embodiment of the present invention.
FIG. 14 is a schematic view of a second valve core according to an embodiment of the present invention.
FIG. 15 is a sectional view of a second valve core according to an embodiment of the present invention.
FIG. 16 is a first schematic view of a sealing cylinder according to an embodiment of the present invention.
FIG. 17 is a second schematic view of a sealing cylinder according to an embodiment of the present invention.
FIG. 18 is a sectional view of a sealing cylinder according to an embodiment of the present invention.
FIG. 19 is a schematic view of a second valve core equipped with a sealing cylinder according to an embodiment of the present application.
FIG. 20 is a schematic side view of a first valve core and a second valve core in a circumferential direction according to an embodiment of the present application.
FIG. 21 is a partial structural schematic of a control valve according to an embodiment of the present invention.
FIG. 22 is an exploded schematic view of the control valve in FIG.20.
FIG. 23 is a partial sectional view of a control valve according to an embodiment of the present invention.
FIG. 24 is a schematic view of a control valve in a first communication mode according to an embodiment of the present application.
FIG. 25 is a schematic view of a control valve in a second communication mode according to an embodiment of the present application.
FIG. 26 is a schematic view of a control valve in a third communication mode according to an embodiment of the present application.
FIG. 27 is a schematic view of a control valve in a fourth communication mode according to an embodiment of the present application.
FIG. 28 is a schematic view of a control valve in a fifth communication mode according to an embodiment of the present application.
FIG. 29 is a schematic view of a control valve in a sixth communication mode according to an embodiment of the present application.
FIG. 30 is a schematic view of a control valve in a seventh communication mode according to an embodiment of the present application.
FIG. 31 is a schematic view of a control valve in an eighth communication mode according to an embodiment of the present application.
FIG. 32 is a schematic view of a control valve in a nineth communication mode according to an embodiment of the present application.
FIG. 33 is a schematic view of a control valve in a tenth communication mode according to an embodiment of the present application.
FIG. 34 is a schematic view of a control valve in an eleventh communication mode according to an embodiment of the present application.
FIG. 35 is a schematic view of a control valve in a twelfth communication mode according to an embodiment of the present application.
FIG. 36 is an exploded schematic view of a driver according to an embodiment of the present invention.

Reference signs are as follows: 1 represents a valve body; 11 represents a valve cavity; 12 represents a side wall portion; 121 represents a communicating hole; 121a represents a first flow channel; 121b represents a second flow channel; 13 represents a mounting portion; 131 represents a mounting plane; 132 represents a valve port; 14 represents a body section; 141 represents an assembly port; 15 represents a valve bonnet; 2 represents a first valve core; 21 represents a first passage; 211 represents an axial two-way slot; 212 represents a circumferential two-way slot; 22 represents a second passage; 22a represents a first connecting port; 22b represents a second connecting port; 23 represents a cut-off groove; 24 represents a first fan-shaped section; 25 represents a second fan-shaped section; 26 represents a third fan-shaped section; 27 represents a fourth fan-shaped section; 28 represents a fifth fan-shaped section; 3 represents a second valve core; 31 represents a third passage; 32 represents a side plate; 321 represents an open hole; 33 represents an end plate; 331 represents an opening; 34 represents an accommodating cavity; 4 represents a sealing gasket; 41 represents a notch; 5 represents a sealing cylinder; 51 represents a sealing block; 52 represents a rubber ring; 53 represents a metal elastic piece; 60 represents a driver; 61 represents a first transmission shaft; 611 represents a fourth fitting portion; 611a represents a fourth protrusion; 62 represents a second transmission shaft; 621 represents a third fitting portion; 622 represents a third groove; 70 represents an actuator mechanism; 7 represents a first actuator assembly; 71 represents a first motor component; 711 represents a first motor; 712 represents a first worm; 713 represents a first magnetic ring; 72 represents a first reducer component; 721 represents a first worm gear; 722 represents a first secondary gear; 722a represents a first large-diameter gear; 722b represents a first small-diameter gear; 723 represents a first connecting gear; 724 represents a first output gear; 724a represents a first gear portion; 724b represents a first connecting portion; 725 represents a first fitting portion; 725a represents a first groove; 8 represents a second actuator assembly; 81 represents a second motor component; 811 represents a second motor; 812 represents a second worm; 813 represents a second magnetic ring; 82 represents a second reducer component; 821 represents a second worm gear; 822 represents a second secondary gear; 822a represents a second large-diameter gear; 822b represents a second small-diameter gear; 823 represents a second connecting section; 824 represents a second output gear ; 824a represents a second gear portion; 824b represents a second connecting portion; 825 represents a second fitting portion; 825a represents a second protrusion; 9 represents a housing; 91 represents a transmission hole; 92 represents a cavity; 100 represents a first sealing ring; 101 represents a second sealing ring; 1000 represents a control valve; 4000 represents an output wheel; 5000 represents a circuit board; 5100 represents a positive wire; 5200 represents a negative wire; and 6000 represents a valve core assembly.

### DETAILED DESCRIPTION

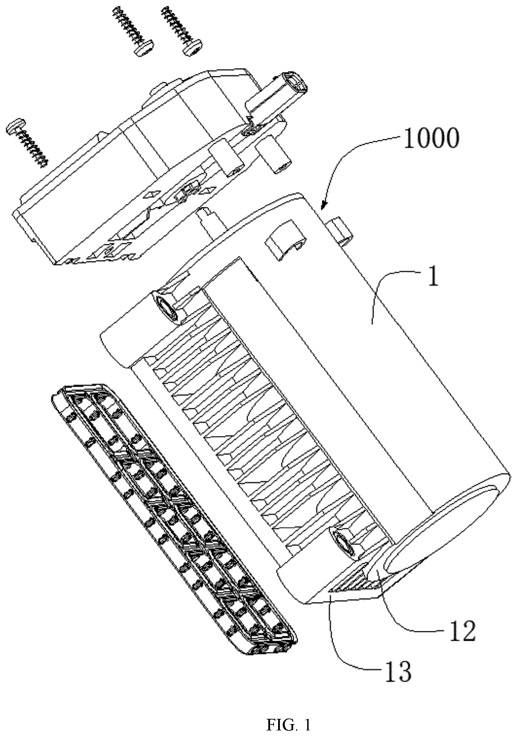

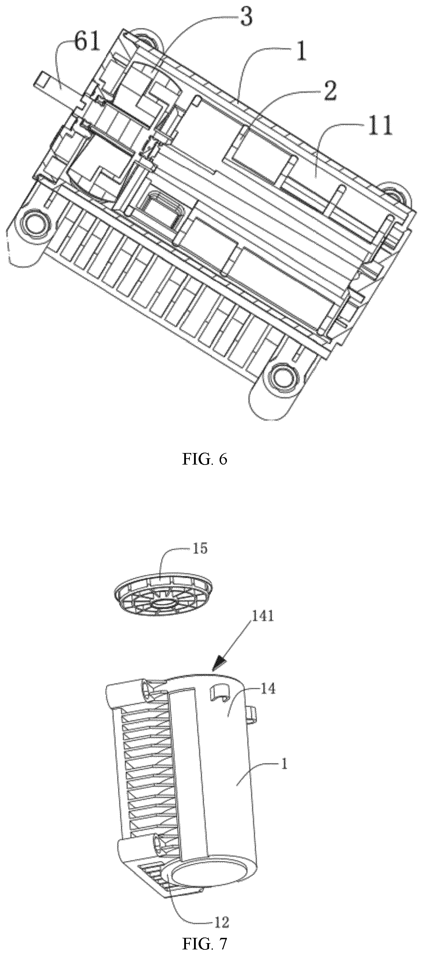

Referring to FIG. 1 to FIG. 7, the present invention provides a control valve 1000. The control valve 1000 includes a valve body 1, a first valve core 2 and a second valve core 3. The valve body 1 provided with a valve cavity 11. The valve body 1 includes a body section 14 and a valve bonnet 15. The body section 14 is provided with an assembly port 141, and the valve bonnet 15 is covered at the assembly port 141 and detachably connected with the body section 14. The valve cavity 11 is located in the body section 14, and the first valve core 2 and the second valve core 3 are installed in the valve cavity 11 of the body section 14 by the assembly port 141. A side wall of the valve body 1 is provided with a plurality of communicating holes 121, and the plurality of communicating holes 121 penetrate through the side wall of the valve body 1 and are in communication with the valve cavity 11. The first valve core 2 is rotatably disposed at one end of the valve cavity 11, the second valve core 3 is rotatably disposed at the other end of the valve cavity 11, and the second valve core 3 is coaxially disposed with the first valve core 2.

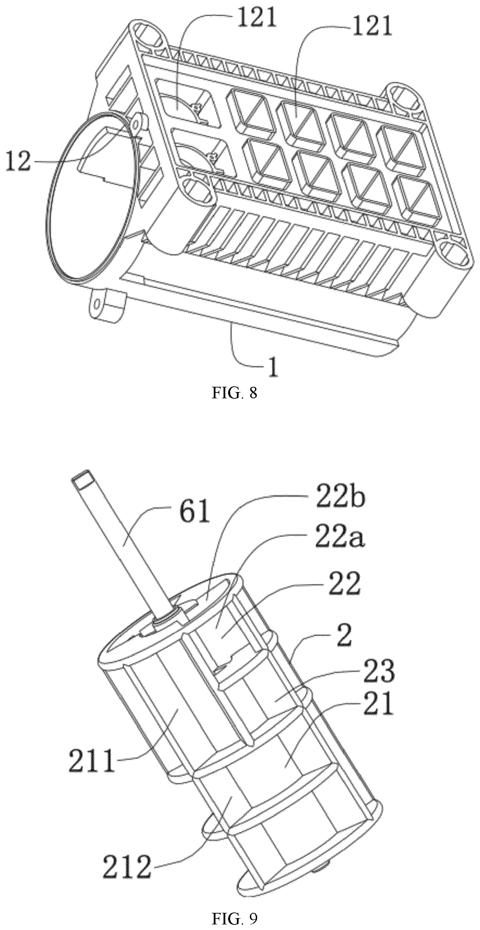

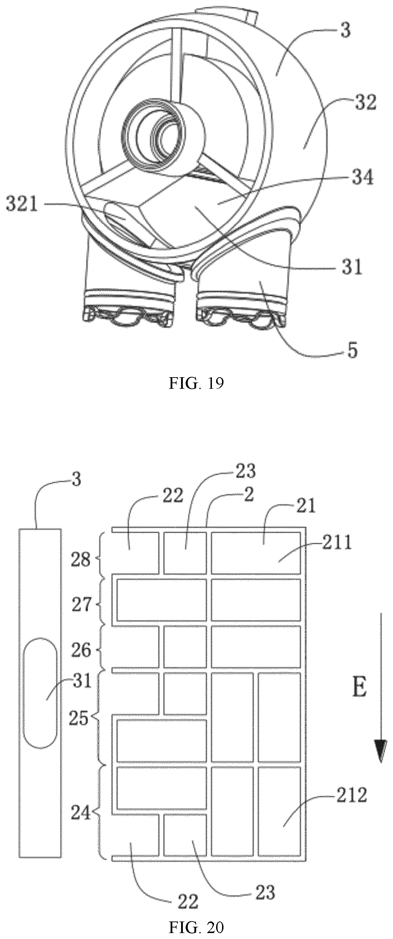

Referring to FIGs. 9, 14 and 20, the first valve core 2 is provided with a plurality of first passages 21 and a plurality of second passages 22 on a circumferential side of the first valve core 2. The second valve core 3 is provided with a third passage 31. The plurality of communicating holes 121 includes a plurality of first flow channels 121a and a plurality of second flow channels 121b. On a condition that the first valve core 2 is rotated by a first predetermined angle, each of the plurality of first passages 21 is capable of being in communication with corresponding two of the plurality of first flow channels 121a and each of the plurality of second passages 22 is capable of being in communication with corresponding one of the plurality of first flow channels 121a. On a condition that the second valve core 3 is rotated by a second predetermined angle, the third passage 31 is capable of being in communication with one or two of the plurality of second flow channels 121b and the third passage 31 is capable of being correspondingly in communication with the second passages 22, so that one of the plurality of first flow channels 121a is correspondingly in communication with one or two of the plurality of second flow channels 121b through the second passages 22 and the third passage 31.

Since the control valve 1000 includes the first valve core 2 and the second valve core 3 which are coaxially arranged, the first valve core 2 and the second valve core 3 can be rotated at different angles, so that the control valve 1000 can form a variety of different communication modes. Therefore, assuming that the first valve core 2 can have *a* communication modes by rotating at different angles, and the second valve core 3 can have b communication modes by rotating at different angles, the entire control valve 1000 can have *a***b* communication modes.

The communication mode includes a two-way flow path or a three-way flow path formed at different positions of the control valve 1000. The two-way flow path refers to a fluid path including one inlet and one outlet, and three-way flow path refers to a fluid path including one inlet and two outlets, or two inlets and one outlet.

The first passage 21 of the first valve core 2 can be correspondingly in communication with two of the plurality of first flow channels 121a of the valve body 1, so that the control valve 1000 forms one or more two-way flow paths, that is, in the two-way flow path, a fluid can enter the control valve 1000 from one of the two of the plurality of first flow channels 121a, and flow out of the control valve 1000 from the other one of the two of the plurality of first flow channels 121a through the first passage 21.

Furthermore, the second passage 22 can be in communication with one of the plurality of first flow channels 121a. The third passage 31 can be in communication with one or two of the plurality of the second flow channels 121b, and the third passage 31 can be in communication with the second passage 22 correspondingly. Therefore, one of the plurality of the first flow channels 121a can be in communicate with one or two of the plurality of the second flow channels 121b through the second passage 22 and the third passage 31.

When one of the plurality of the first flow channels 121a is in communication with one of the plurality of the second flow channels 121b through the second passage 22 and the third passage 31, the control valve 1000 has two-way flow path. That is, the fluid can enter the control valve 1000 from one of the plurality of the first flow channels 121a and enter one of the plurality of the second flow channels 121b through the second passage 22 and the third passage 31 in turn, and finally leave the control valve 1000 through the plurality of second flow channels 121b. Alternatively, the fluid can enter the control valve 1000 from one of the plurality of the second flow channels 121b and enter the first flow channel 121a through the third passage 31 and the second passage 22 in turn, and finally leave the control valve 1000 through the plurality of first flow channels 121a.

When one of the plurality of the first flow channels 121a is in communication with two of the plurality of the second flow channels 121b through the second passage 22 and the third passage 31, the control valve 1000 has a three-way flow path. That is, the fluid can enter the control valve 1000 from the plurality of first flow channels 121a, and enter the plurality of second flow channels 121b through the second passage 22 and the third passage 31 in turn, and finally leave the control valve 1000 through two of the plurality of second flow channels 121b. Alternatively, the fluid can enter the control valve 1000 from two of the plurality of second flow channels 121b and enter the plurality of first flow channels 121a through the third passage 31 and the second passage 22 in turn, and finally leave the control valve 1000 through the plurality of first flow channels 121a. Alternatively, the fluid can enter the control valve 1000 from one of the plurality of first flow channels 121a and one of the plurality of second flow channels 121b, and finally leave the control valve 1000 through another of the plurality of second flow channels 121b. Alternatively, the fluid can enter the control valve 1000 from one of the plurality of second flow channels 121b, and finally leave the control valve 1000 through one of the plurality of first flow channels 121a and another of the plurality of second flow channels 121b.

From the above, it can be seen that the control valve 1000 provided can have more communication modes than the existing control valve with a single valve core structure. And because the first valve core 2 and the second valve core 3 of the control valve 1000 are arranged in the same valve cavity 11 of the valve body 1, and the first valve core 2 and the second valve core 3 are coaxially arranged, therefore, the control valve 1000 of the present invention is more compact in structure and smaller in volume than the existing control valve.

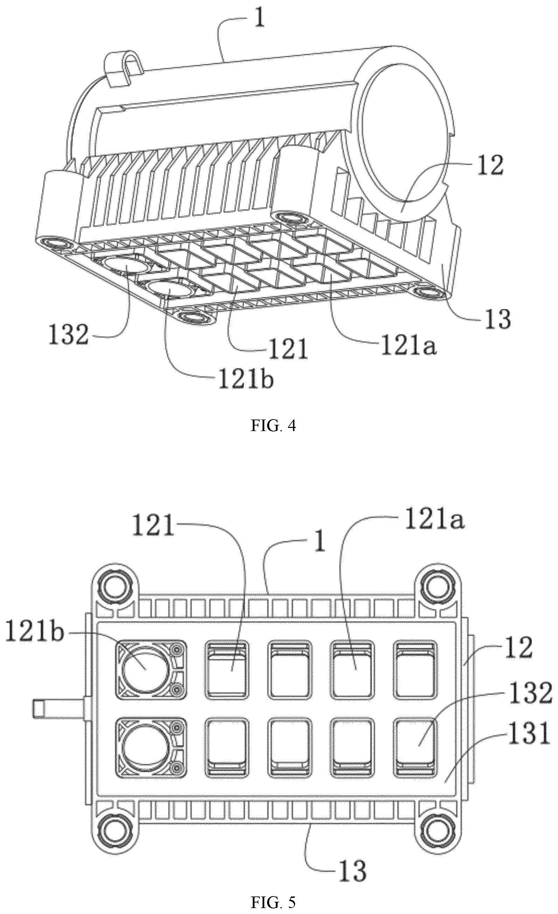

In an embodiment, referring to FIG. 5, the control valve 1000 includes the plurality of first flow channels the number of which is *2n,* wherein *n* is greater than or equal to 2. The control valve 1000 includes two second flow channels. Each of the plurality of first passages 21 is capable of being in communication with different two of the plurality of first flow channels 121a to form less than or equal to n-1 two-way flow paths, and one of the plurality of first flow channels 121a is capable of being in communication with one of the plurality of second flow channels 121b through corresponding one of the plurality of second passages 22 and the third passage 31 to form a two-way flow path. Alternatively, each of the plurality of first passages 21 is capable of being in communication with different two of the plurality of first flow channels 121a to form less than or equal to n-1 two-way flow paths, and one of the plurality of first flow channels 121a is capable of being in communication with two of the plurality of second flow channels 121b through corresponding one of the plurality of second passages 22 and the third passage 31 to form a three-way flow path. In this way, the plurality of communicating holes 121 installed in the valve body 1 can be used to the maximum extent, so as to increase the number of two-way flow paths that can be formed on the control valve 1000 and increase a utilization rate of the control valve 1000.

Furthermore, referring to FIG. 5, the plurality of communicating holes 121 are distributed in two rows in the valve body 1, each row of the plurality of communicating holes 121 includes n of the plurality of first flow channels 121a and one of the plurality of second flow channels 121b, and two of the plurality of second flow channels 121b corresponding to two rows are disposed at the same end of the valve body 1. In this way, the distribution of the communicating hole 121 on the valve body 1 is more reasonable and beautiful, which is beneficial to process of the communicating hole 121 on the valve body 1 and increase of a processing efficiency of the control valve 1000. Furthermore, it is not limited that, the communicating hole 121 can also be divided into three columns, four columns, five columns and other different column numbers distributed in the valve body 1, which is not listed anymore.

In an embodiment, the first valve core 2 is a columnar structure, the first valve core 2 is provided with a plurality of cut-off grooves 23, each of the plurality of the cut-off grooves 23 is capable of closing corresponding one of the plurality of first flow channels 121a. The plurality of first passages 21 includes a plurality of axial two-way slots 211 and a plurality of circumferential two-way slots 212. Each of the plurality of axial two-way slots 211 is capable of being correspondingly in communication with two of the plurality of first flow channels 121a disposed in an axial direction of the valve body 1, each of the plurality of circumferential two-way slots 212 is capable of being correspondingly in communication with two of the plurality of first flow channels 121a disposed in a circumferential direction of the valve body 1. The first valve 1 core includes a first fan-shaped section 24, a second fan-shaped section 25, a third fan-shaped section 26, a fourth fan-shaped section 27 and a fifth fan-shaped section 28 having a fan-shaped cross section and sequentially interconnected along a circumferential direction of the first valve core 1.

Illustratively, one end of the first fan-shaped section 24 away from the second valve core 3 is provided with two of the plurality of circumferential two-way slots 212 distributed along the circumferential direction of the valve body 2, and the other end of the first of fan-shaped section 24 adjacent to the second valve core is provided with one of the plurality of axial two-way slots 211, one of the plurality of cut-off grooves 23, and one of the plurality of second passages 22. The one of the plurality of axial two-way slots 211 is located on a side of the first fan-shaped section 24 adjacent to the second fan-shaped section 28. Both the one of the plurality of cut-off grooves 23 and the one of the plurality of second passages 22 are located along the axial direction of the first valve core 2 and on a side of the first fan-shaped section 24 adjacent to the fifth fan-shaped section 28, and the one of the plurality of second passages 22 is adjacent to the second valve core 3. The second fan-shaped section 25 is in mirror image symmetry with the first fan-shaped section 24. The third fan-shaped section 26 is provided with one of the plurality of axial two-way slots 211, one of the plurality of cut-off grooves 23 and one of the plurality of second passages 22 in a direction from away from the second valve core 3 to towards the second valve core 3. The fourth fan-shaped section 27 is provided with two of the plurality of axial two-way slots 211 in sequence in a direction from away from the second valve core 3 to towards the second valve core 3. The fifth fan-shaped section 28 is provided with one of the plurality of axial two-way slots 211, one of the plurality of cut-off grooves 23 and one of the plurality of second passages 22 in a direction from away from the second valve 3 core to towards the second valve core 3.

Furthermore, n is 4, therefore, the control valve 1000 are provided with eight of the plurality of first flow channels 121a, and eight of the plurality of first flow channels 121a and two of the plurality of second flow channel 121b are divided into two columns, and the two columns of the plurality of communicating holes 121 are mirror images symmetry. Furthermore, in this embodiment, both the first valve core 2 and the second valve core 3 rotate in the first direction E. The cross section of the first fan-shaped section 24 corresponds to a central angle of 720°/7, the cross section of the second fan-shaped section 25 corresponds to a central angle of 720°/7, and the cross section of the third fan-shaped section 26 corresponds to a central angle of 360°/7. The cross section of the fourth fan-shaped section 27 corresponds to a central angle of 360°/7, and the cross section of the fifth fan-shaped section 28 corresponds to a central angle of 360°/7. In this way, a rotation angle of the first valve core 2 is an integer multiple of 360°/7, which is beneficial to adjustment of the first valve core 2 and reduces a difficulty of adjustment of the control valve 1000.

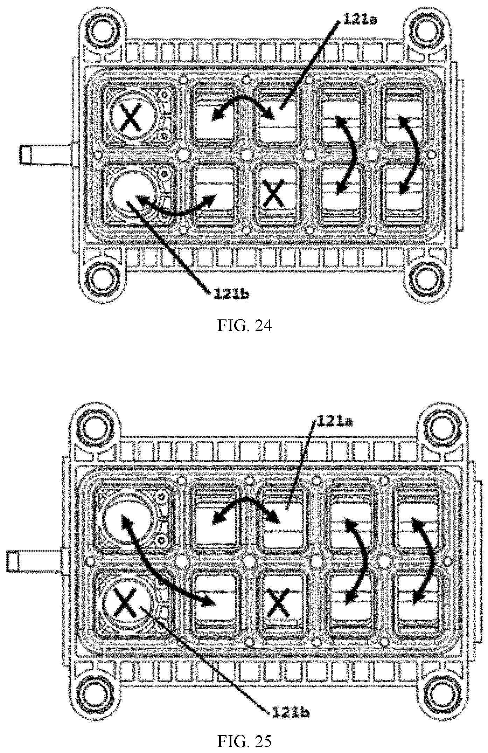

Referring to FIG. 24, when the control valve 1000 is in a first communication mode, the first predetermined angle is zero, the first flow channel 121a rotates to the first fan-shaped section 24, and the second predetermined angle is zero. The third passage 31 is in communication with the second flow channel 121b located below, and the third passage 31 is in communication with the second passage 22 located at the first fan-shaped section 24. A corresponding one of the first flow channels 121a, one of the second passages 22, one of the third passages 31 and one of the second flow channels 121b form a two-way flow path. Three of the first passages 21 respectively are in communication with different two of the first flow channels 121a to form three two-way flow paths, and the cut-off groove 23 correspondingly closes one of the first flow channels 121a to form a closed flow path.

Referring to FIG. 25, when the control valve 1000 is in a second communication mode, the first predetermined angle is zero, the first flow channel 121a rotates to the first fan-shaped section 24, and the second predetermined angle is 120° in the first direction. The third passage 31 is in communication with the second flow channel 121b located above, and the third passage 31 is in communication with the second passage 22 located at the first fan-shaped section 24. Corresponding one of the first flow channels 121a, one of the second passages 22, one of the third passages 31 and one of the second flow channels 121b form a two-way flow path. Three of the first passages 21 are respectively in communication with different two of the first flow channels 121a to form three two-way flow paths, and the cut-off groove 23 correspondingly closes one the first flow channel 121a to form a closed flow path.

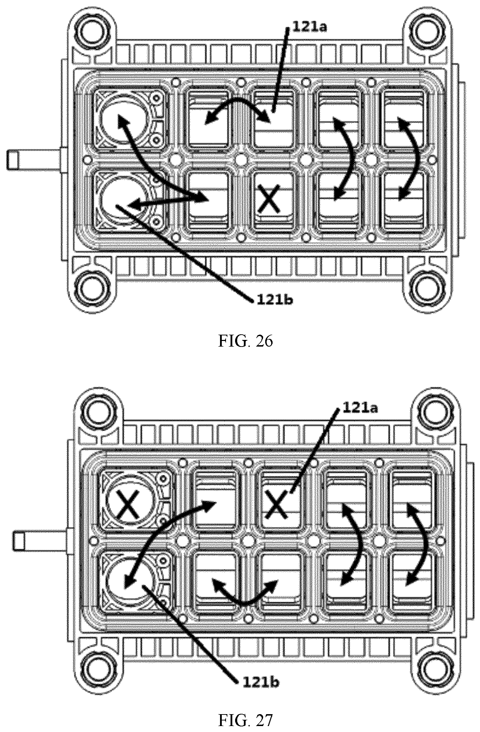

Referring to FIG. 26, when the control valve 1000 is in a third communication mode, the first predetermined angle is zero, the first flow channel 121a rotates to the first fan-shaped section 24, and the second predetermined angle is 60° in the first direction. The third passage 31 is in communication with two of the second flow channels 121b, and the third passage 31 is in communication with the second passage 22 located in the first fan-shaped section 24. Corresponding one of the first flow channels 121a, one of the second passages 22, one of the third passages 31 and two of the second flow channels 121b form a three-way flow path. Three of the first passages 21 are respectively in communication with different two of the first flow channels 121a to form three two-way flow paths, and the cut-off groove 23 correspondingly seals one of the first flow channels 121a to form a closed flow path.

Referring to FIG. 27, when the control valve 1000 is in a fourth communication mode, the first predetermined angle is 720°/7 in the first direction, the first flow channel 121a rotates to the second fan-shaped section 25, and the second predetermined angle is zero. The third passage 31 is in communication with the second flow channel 121b located below, and the third passage 31 is in communication with the second passage 22 located in the second fan-shaped section 25. Corresponding one of the first flow channels 121a, one of the second passages 22, one of the third passages 31 and one of the second flow channels 121b form a two-way flow path. Three of the first passages 21 are respectively in communication with different two of the first flow channels 121a to form three two-way flow paths, and the cut-off groove 23 correspondingly seals one of the first flow channels 121a to form a closed flow path.

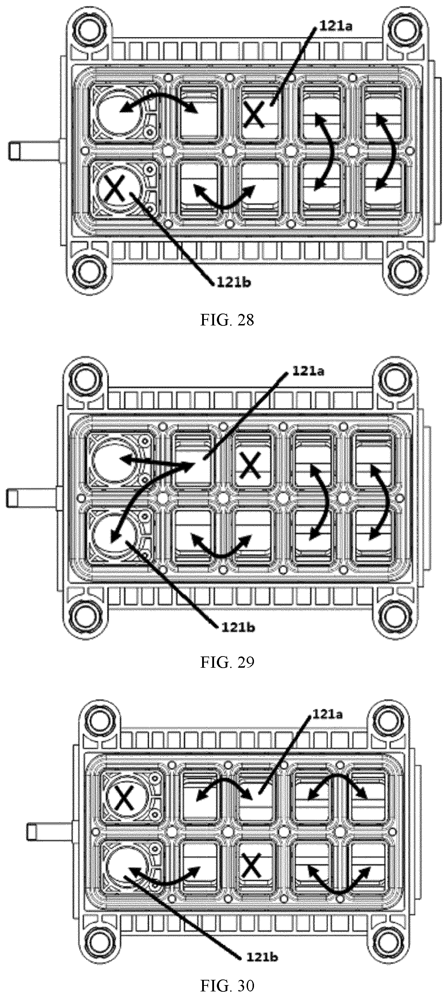

Referring to FIG. 28, when the control valve 1000 is in a fifth communication mode, the first predetermined angle is 720°/7 in the first direction, the first flow channel 121a is rotated to the second fan-shaped section 25, and the second predetermined angle is 120° in the first direction. The third passage 31 is in communication with the second flow channel 121b located above, and the third passage 31 is in communication with the second passage 22 located in the second fan-shaped section 25. Corresponding one of the first flow channels 121a, one of the second passages 22, one of the third passages 31 and one of the second flow channels 121b form a two-way flow path. Three of the first passages 21are respectively in communication with different two of the first flow channels 121a to form three two-way flow paths, and the cut-off groove 23 correspondingly seals one of the first flow channels 121a to form a closed flow path.

Referring to FIG. 29, when the control valve 1000 is in a sixth communication mode, the first predetermined angle is 720°/7 in the first direction, the first flow channel 121a is rotated to the second fan-shaped section 25, and the second predetermined angle is 60° in the first direction. The third passage 31 is in communication two of the second flow channels 121b, and the third passage 31 is in communication with the second passage 22 located in the second fan-shaped section 25.Corresponding one of the first flow channel 121a, one of the second passage 22, one of the third passage 31 and two of the second flow channel 121b form a three-way flow path. Three of the first passages 21 respectively are connected with different two of the first flow channels 121a to form three two-way flow paths, and the cut-off groove 23 correspondingly seals one of the first flow channels 121a to form a closed flow path.

Referring to FIG. 30, when the control valve 1000 is in a seventh communication mode, the first predetermined angle is 1440°/7 along the first direction, the first flow channel 121a rotates to the third fan-shaped section 26 and the fourth fan-shaped section 27, and the second predetermined angle is zero. The third passage 31 is in communication with the second flow channel 121b located below, and the third passage 31 is in communication with the second passage 22 located in the third fan-shaped section 26. Corresponding one of the first flow channels 121a, one of the second passages 22, one of the third passages 31 and one of the second flow channels 121b form a two-way flow path. Three of the first passages 21are respectively in communication with different two of the first flow channels 121a to form three two-way flow paths, and the cut-off groove 23 correspondingly seals one of the first flow channels 121a to form a closed flow path.

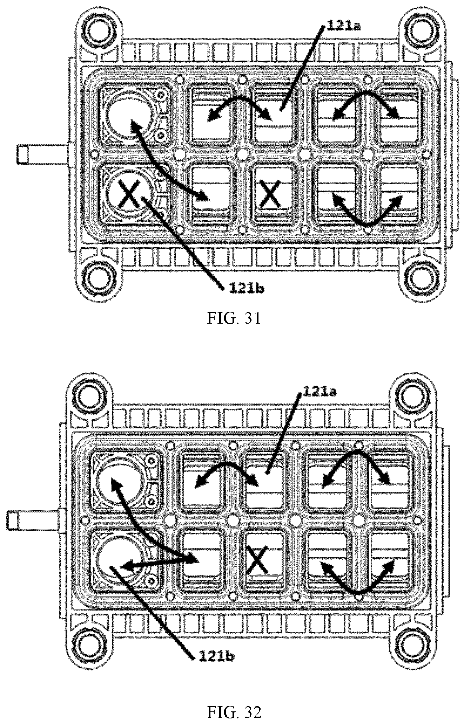

Referring to FIG. 31, when the control valve 1000 is in an eighth communication mode, the first predetermined angle is 1440°/7 in the first direction, the first flow channel 121a rotates to the third fan-shaped section 26 and the fourth fan-shaped section 27, and the second predetermined angle is 120° in the first direction. The third passage 31 is in communication with the second flow channel 121b located above, and the third passage 31 is in communication with the second passage 22 located in the third fan-shaped section 26. Corresponding one of the first flow channels 121a, one of the second passages 22, one of the third passages 31 and one of the second flow channels 121b form a two-way flow path. Three of the first passages 21 are respectively in communication with different two of the first flow channels 121a to form three two-way flow paths, and the cut-off groove 23 correspondingly seals one of the first flow channels 121a to form a closed flow path.

Referring to FIG. 32, when the control valve 1000 is in a ninth communication mode, the first predetermined angle is 1440°/7 in the first direction, the first flow channel 121a rotates to the third fan-shaped section 26 and the fourth fan-shaped section 27, and the second predetermined angle is 60° in the first direction. The third passage 31 is in communication with the second flow channel 121b located above, and the third passage 31 is in communication with the second passage 22 located in the third fan-shaped section 26. Corresponding one of the first flow channels 121a, one of the second passages 22, one of the third passages 31 and one of the second flow channels 121b form a three-way flow path. Three first passages 21 are respectively in communication with different two of the first flow channels 121a to form three two-way flow paths, and the cut-off groove 23 correspondingly seals one of the first flow channels 121a to form a closed flow path.

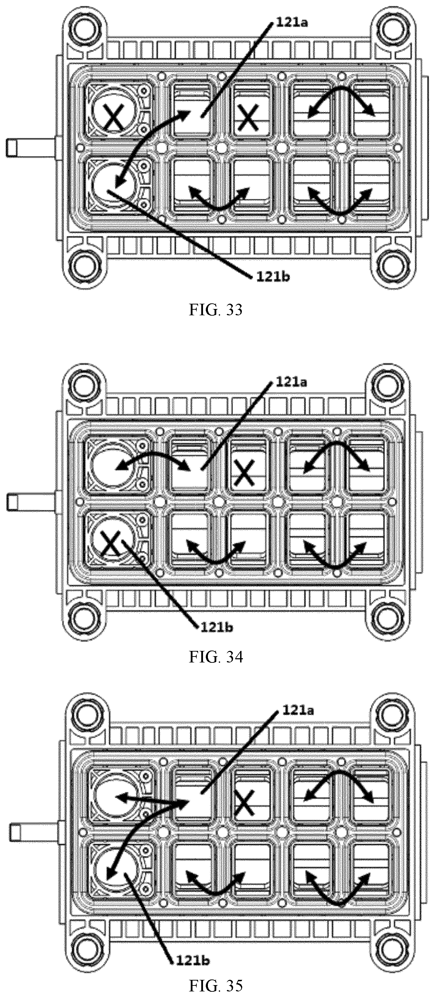

Referring to FIG. 33, when the control valve 1000 is in a tenth connected mode, the first predetermined angle is 1800°/7 in the first direction, the first flow channel 121a rotates to the fourth fan-shaped section 27 and the fifth fan-shaped section 28, and the second predetermined angle is zero. The third passage 31 is in communication with the second flow channel 121b located below, and the third passage 31 is in communication with the second passage 22 located in the fifth fan-shaped section 28. Corresponding one of the first flow channel 121a, one of the second passage 22, one of the third passage 31 and one of the second flow channel 121b form a two-way flow path. Three of the first passages 21 are respectively in communication with different two of the first flow channels 121a to form three two-way flow paths, and the cut-off groove 23 correspondingly seals one of the first flow channels 121a to form a closed flow path.

Referring to FIG. 34, when the control valve 1000 is in an eleventh communication mode, the first predetermined angle is 1800°/7 in the first direction, the first flow channel 121a rotates to the fourth fan-shaped section 27 and the fifth fan-shaped section 28, and the second predetermined angle is 120° in the first direction. The third passage 31 is in communication with the second flow channel 121b located above, and the third passage 31 is in communication with the second passage 22 located in the fifth fan-shaped section 28. Corresponding one of the first flow channels 121a, one of the second passages 22, one of the third passages 31 and one of the second flow channels 121b form a two-way flow path. Three of the first passages 21 are respectively in communication with different two of the first flow channels 121a to form three two-way flow paths, and the cut-off groove 23 correspondingly seals one of the first flow channels 121a to form a closed flow path.

Referring to FIG. 35, when the control valve 1000 is in a twelfth communication mode, the first predetermined angle is 1800°/7 in the first direction, the first flow channel 121a rotates to the fourth fan-shaped section 27 and the fifth fan-shaped section 28, and the second predetermined angle is 60° in the first direction. The third passage 31 is in communication with two of the second flow channels 121b, and the third passage 31 is in communication with the second passage 22 located in the fifth fan-shaped section 28. Corresponding one of the first flow channels 121a, one of the second passages 22, one of the third passages 31 and two of the second flow channels 121b form a three-way flow path. Three of the first passages 21 are respectively in communication with different two of the first flow channels 121a to form three two-way flow paths, and the cut-off groove 23 correspondingly closes one of the first flow channels 121a to form a closed flow path.

In an embodiment, referring to FIG. 8, the valve body 1 includes a side wall portion 12 and a mounting portion 13. The side wall portion 12 of the valve body 1 is a side wall of the valve cavity 11 or at least a part of the side wall of the valve cavity 11. The plurality of communicating holes 121 are located in the side wall portion 12 of the valve body 1. One side of the mounting portion 13 of the valve body 1 is fixedly connected to the side wall portion 12 of the valve body 1, and the other side, away from the side wall portion 12, of the mounting portion 13 of the valve body 1 is provided with a mounting plane 131. The mounting plane 131 is provided with a valve port 132 correspondingly in communication with the plurality of communicating holes 121. By providing the side wall portion 12 and the communicating holes 121 on the side wall portion 12, the communicating holes 121 on the valve body 1 can be more compact. The control valve 1000 needs to be installed on other parts when in use and the mounting part 13 connected with the side wall part 12 are arranged outside the valve body 1. Then the control valve 1000 can be installed on other parts by the mounting portion 13, and the mounting plane 131 is arranged on the other side of the mounting portion 13 away from the side wall portion 12. By providing the mounting plane 131, it greatly reduces installation difficulty of the control valve 1000 and other parts, and improves the installation efficiency of the control valve 1000. Specifically, the mounting plane 131 is provided with a plurality of threaded holes, and the control valve 1000 is detachably connected to other parts by fasteners.

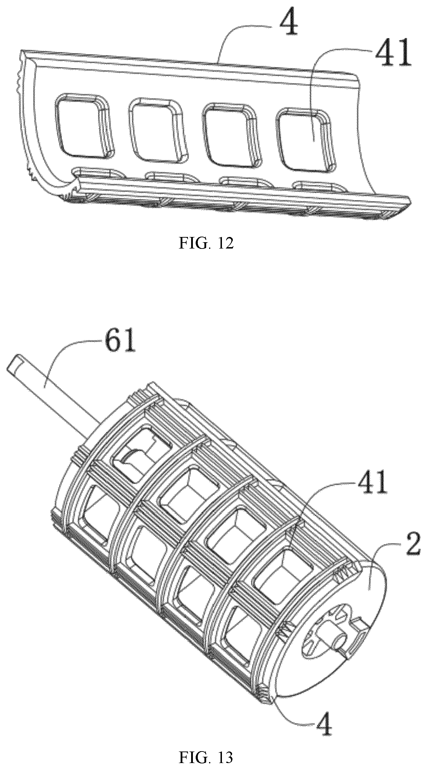

Furthermore, referring to FIGs. 12 and 13, the control valve 1000 further includes a sealing gasket 4. The sealing gasket 4 is disposed between the first valve core 2 and the side wall portion 12 of the valve body 1, the sealing gasket 4 is provided with a notch 41 correspondingly in communication with the plurality of first flow channels 121a. One surface of the sealing gasket 4 in a thickness direction of the sealing gasket 4 is in contact with and sealing fit with a surface of the first valve core 2, and the other surface of the sealing gasket 4 in the thickness direction of the sealing gasket 4 is sealingly connected to an inner surface of the side wall portion 12 of the valve body 1. In this way, the fluid entering the valve cavity 11 from the first flow channel 121a must first pass through the notch 41 on the sealing gasket 4. Since one surface of the sealing gasket 4 in the thickness direction is in contact with and sealed with the surface of the first valve core 2, and the other surface of the sealing gasket 4 in the thickness direction is hermetically connected to the inner surface of the side wall portion 12, it is difficult for fluid to leak at a joint of the first valve core 2 and the valve body 1, which is beneficial to the use of the control valve 1000. Specifically, the sealing gasket 4 is in a sheet shape, and the surface of the sealing gasket 4 adjacent to the first valve core 2 is smooth, which is beneficial to the rotation of the first valve core 2 relative to the sealing gasket 4. The sealing gasket 4 is usually made of rubber or silica gel, and the whole sealing gasket 4 is integrally formed.

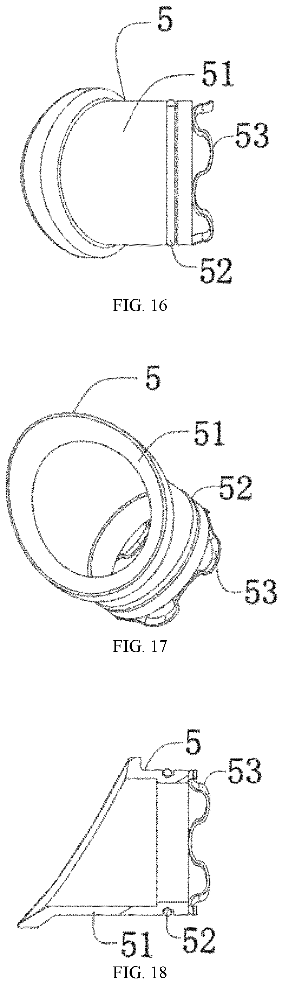

Furthermore, referring to FIGs. 16 to 19, the control valve 1000 further includes a sealing cylinder 5. The sealing cylinder 5 is disposed between the second valve core 3 and the side wall portion 12 of the valve body 1. The sealing cylinder 5 is correspondingly in communication with the plurality of second flow channels 121b and the third passage 31. One end of the sealing cylinder 5 is in contact with and sealingly matched with an outer surface of the second valve core 3, and the other end of the sealing cylinder 5 is sealingly connected to an inner surface of the side wall portion 12. In this way, it is difficult for the fluid to leak at a joint of the second valve core 3 and the valve body 1, which is beneficial to the use of the control valve 1000. Specifically, the sealing cylinder 5 is cylindrical, and the end surface of the sealing cylinder 5 adjacent to the second valve core 3 is a smooth curved surface, which is beneficial for the sealing cylinder 5 to abut against and be in contact with the surface of the second valve core 3. More specifically, the sealing cylinder 5 includes a sealing block 51 and the metal elastic piece 53 connected to one end of the sealing block 51. One end of the sealing block 51 away from the metal elastic piece 53 is in contact with the outer surface of the second valve core 3, and one end of the metal elastic piece 53 away from the sealing block 51 abuts against the valve body 1. In this way, the metal elastic piece 53 can provide enough buffer space for the sealing cylinder 5, so as to avoid a plastic deformation of the sealing cylinder 5 after being impacted, which will affect the sealing performance of the control valve 1000. In addition, a rubber ring 52 is sleeved on the outer side of the sealing block 51, and an outer side of the rubber ring 52 which away from the sealing block 51 is in tightly contact with the inner wall of the second flow channel 121b.

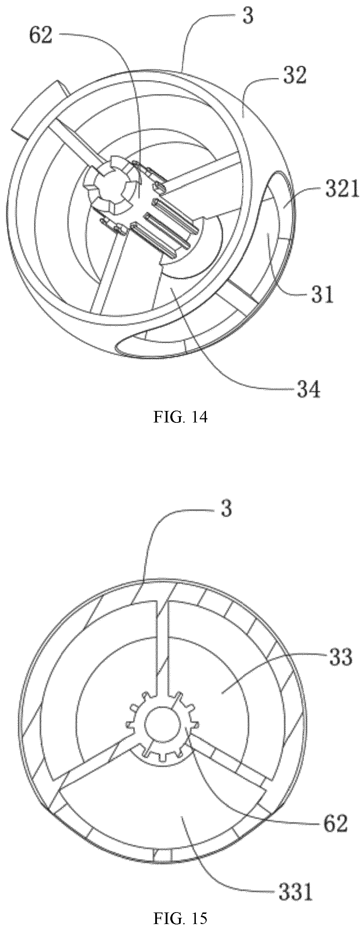

In an embodiment, referring to FIGs. 14 and 15, the second valve core 3 includes a side plate 32 and an end plate 33. The side plate 32 is in a circle shape, the end plate 33 is disposed at one end of the side plate 32 adjacent to the first valve core 2, and an accommodating cavity 34 is formed by the side plate 32 and the end plate 33 being surrounded. The side plate 32 is provided with an open hole 321 through which the second valve core 3 is in communication with the plurality of second flow channels 121b. The end plate 33 is provided with an opening 331 through which the second valve core 3 is in communication with the plurality of second passages 22. The third passage 31 is formed by the open hole 321, the accommodating cavity 34 and the opening 331. When the side plate 32 rotates to the open hole 321 to connect the second flow channel 121b of the valve body 1, the third passage 31 can be in communication with the second flow channel 121b. And, the open hole 321 is aligned with two of the second flow channels 121b, so the third passage 31 can be in communication with two of the second flow channels 121b at the same time. The open hole 321 is aimed at one of the second flow channels 121b, so the third passage 31 can be only in communication with a single one of the second flow channels 121b. When the side plate 32 is rotated to a part other than the open hole 321 which is in communication with to the second flow channel 121b of the valve body 1, the third passage 31 cannot be in communication with the second flow channel 121b. This arrangement simplifies the structure of the second valve core 3 and reduces the manufacturing difficulty of the control valve 1000. Similarly, referring to FIG. 9 the second passage 22 also has two communication ports, namely, the first connecting port 22a and the second connecting port 22b. The first connecting port 22a is arranged towards the valve body 1. In this way, the first connecting port 22a can be configured to be in communication with the first flow channel 121a. The second connecting port 22b is arranged at the end of the first valve core 2 facing the second valve core 3. In this way, the second connecting port 22b can be configured to be in communication with the opening 331.

In an embodiment, referring to FIGs. 1 to 3 and 21 to 23, the control valve 1000 further includes a first transmission shaft 61, a second transmission shaft 62, a first actuator assembly 7 and a second actuator assembly 8. The second transmission shaft 61 is fixedly connected to the second valve core 2. The second transmission shaft 62 is fixedly connected to the second valve core 3, the second transmission shaft 62 is sleeved outside of the first transmission shaft 61, and the second transmission shaft 62 is coaxially disposed with the first transmission shaft 61. The first actuator assembly 7 is coupled to the first transmission shaft 61 to drive the first transmission shaft 61 to rotate. The second actuator assembly 8 is coupled to the second transmission shaft 62 to drive the second transmission shaft 62 to rotate. In this way, the rotation of the first valve core 2 is independently controlled by the first actuator assembly 7, and the rotation of the second valve core 3 is independently controlled by the second actuator assembly 8, it is beneficial to the separate adjustment of the first valve core 2 and the second valve core 3, and improves the flexibility of the control valve 1000. In this embodiment, the first actuator assembly 7 and the second actuator assembly 8 are both located on the side of the second valve core 3 away from the first valve core 2. In order to improve the compactness of structure of the control valve 1000, the second transmission shaft 62 is sleeved outside the first transmission shaft 61. It is not limited that, when both the first actuator assembly 7 and the second actuator assembly 8 are located on the side of the first valve core 2 away from the second valve core 3, alternatively, the first transmission shaft 61 can be sleeved outside the second transmission shaft 62. When the first actuator assembly 7 is arranged on the side of the first valve core 2 away from the second valve core 3 and the second actuator assembly 8 is located at the side of the second valve core 3 away from the first valve core 2, the first transmission shaft 61 and the second transmission shaft 62 are not nested with each other. In this embodiment, the first transmission shaft 61 penetrates the whole first valve core 2, which is beneficial to connection between the first transmission shaft 61 and the first valve core 2 more tightly.

In an embodiment, referring to FIG. 14, the accommodating cavity 34 is internally provided with a rotationally symmetrical support plate. One end of the support plate is connected with the second transmission shaft 62, and the other end of the support plate is connected with an inner wall of the side plate 32. In this way, a structural strength of the second valve core 3 is improved, and a service life of the control valve 1000 is prolonged.

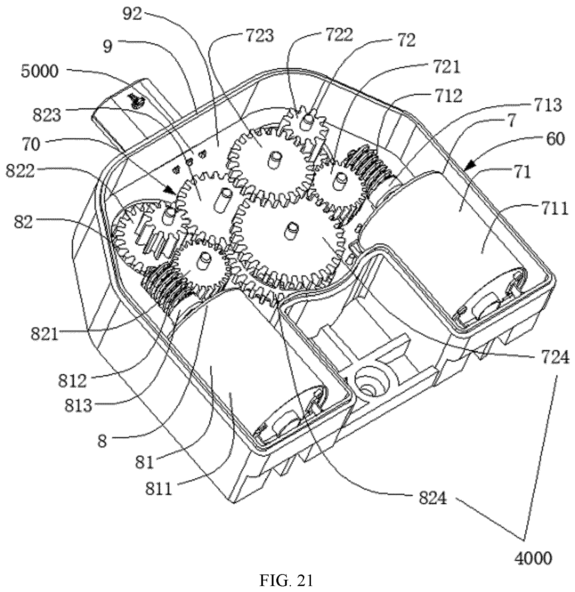

In an embodiment, referring to FIG. 21, the first actuator assembly 7 includes a first motor component 71 and a first reducer component 72. The first reducer component 72 is connected to the first motor component 71 and the first transmission shaft 61. The first motor component 71 is capable of reducing an output rotational speed and driving the first transmission shaft 61 to rotate by the first reducer component 72. The second actuator assembly 8 includes a second motor component 81 and a second reducer component 82. The second reducer component 82 is connected to the second motor component to the second transmission shaft 62. The second motor component 81 is capable of reducing an output rotational speed and driving the second transmission shaft 62 to rotate by the second reducer component 82. By providing the first motor component 71, it can greatly improve the control accuracy of the first valve core 2. Similarly, by providing the second motor component 81, it can greatly improve the control accuracy of the second valve core 3. By providing the first reducer component 72, it is beneficial to decrease of the rotation speed of the first motor component 71 in a reasonable range, so as to avoid control accuracy of the first valve core 2 being affected by too fast rotation speed of the first valve core 2. Similarly, by providing the second magnetic ring 82, it is conducive to reducing the rotational speed of the second motor component 81 to be in a reasonable range and avoiding control accuracy of the second valve core 3 from being affected by too fast rotation speed of the second valve core 3.

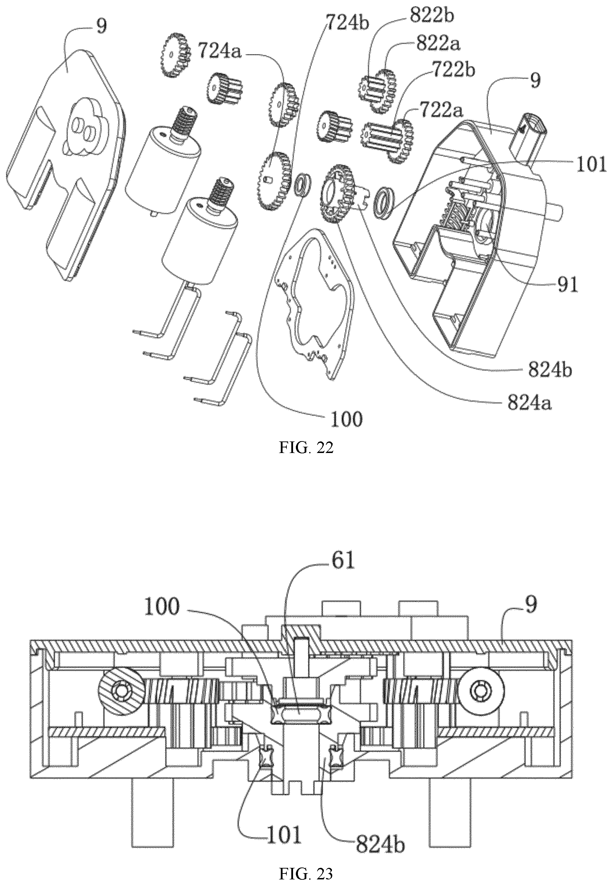

Furthermore, referring to FIG. 21 and FIG. 22, the first motor component 71 includes a first motor 711 and a first worm 712. The first worm 712 is connected to an output shaft of the first motor 711. The first reducer component 72 includes a first worm gear 721, a first secondary gear 722, a first connecting gear 723 and a first output gear 724 connected in sequential meshes. The first worm gear 721 is connected in mesh to the first worm 712. The first output gear 724 is clamped to an end of the first transmission shaft 61 extending out of the second transmission shaft 62. By providing the first worm 712 and the first worm gear 721, it facilitates the connection between the first motor 711 and the first secondary gear 722, and enables the first worm 712 and the first worm gear 721 to have a larger transmission ratio. In other words, an angular velocity of the first worm gear 721 is much smaller than that of the first worm 712, which is beneficial to decrease of the rotational speed of the first motor 711. By providing the first secondary gear 722, an output speed of the first motor 711 can be further reduced, which is beneficial to precise control of the rotation angle of the first valve core 2 by the control valve 1000.

The second motor component 81 includes a second motor 811 and a second worm 812. The second worm 812 is connected to an output shaft of the second motor 811. The second reduction gear component 82 includes a second worm gear 821, a second secondary gear 822, a second connecting gear 823 and a second output gear 824 connected in sequential mesh. The second worm gear 821 is connected in mesh to the second worm 812. The second output gear 824 is sleeved on a part of the first transmission shaft 61 extending out of the second transmission shaft 62. The second output gear 824 is clamped to an end of the second transmission shaft 62 away from the first valve core 2. By providing the second worm 812 and the second worm gear 821, it is beneficial to connection between the second motor 811 and the second secondary gear 822. The second worm 812 and the second worm gear 821 can have greater transmission, in other words, an angular velocity of the second worm gear 821 is much smaller than that of the second worm 812, which is beneficial to decrease of the rotational speed of the second motor 811. By providing the second secondary gear 822, the output speed of the second motor 811 can be further reduced, which is beneficial to the precise control of the rotation angle of the second valve core 3 by the control valve 1000.

Furthermore, in an embodiment, referring to FIG. 22, the first secondary gear 722 includes a first large-diameter gear 722a and a first small-diameter gear 722b, the first large-diameter gear 722a and the first small-diameter gear 722b are coaxially provided and fixedly connected, a diameter of the first large-diameter gear 722a is greater than that of the first small-diameter gear 722b. The first large-diameter gear 722a is connected in mesh with the first worm gear 721. The first small-diameter gear 722b is connected in mesh with the first connecting gear 723. In this way, the structure of the first secondary gear 722 is simpler, which is conducive to decrease of the assembly difficulty of the first actuator assembly 7, thus improving the assembly efficiency of the entire control valve 1000.

In an embodiment, referring to FIG. 22, the second secondary gear 822 includes a second large-diameter gear 822a and a second small-diameter gear 822b. The second large-diameter gear822a and the second small-diameter gear 822b are coaxially provided and fixedly connected. A diameter of the second large-diameter gear 822a is greater than that of the second small-diameter gear 822b. The second large-diameter gear 822a is connected in mesh with the second worm gear 821. The second small-diameter gear 822b is connected in mesh with the second connecting gear 823. In this way, the structure of the second secondary gear 822 is simpler, which is conducive to decrease of the assembly difficulty of the second actuator assembly 8, thus improving the assembly efficiency of the entire control valve 1000.

In an embodiment, referring to FIGs. 21 to 23, the control valve 1000 further includes a housing 9. Both the first actuator assembly 7 and the second actuator assembly 8 are disposed in the housing 9. The housing 9 is provided with a transmission hole 91. The compactness of the control valve 1000 can be further improved by providing the housing 9 and disposing both the first actuator assembly 7 and the second actuator assembly 8 in the housing 9.

The first output gear 724 includes a first gear portion 724a and a first connection portion 724b. The first gear portion 724a is connected in mesh with the first connection gear 724b. One end of the first connection portion 724b is fixedly connected to the first gear portion 724a and the other end of the first connection portion 724b is connected to the first transmission shaft 61 through the transmission hole 91. "The other end of the first connection portion 724b being connected to the first transmission shaft 61 through the transmission hole 91" means that an end of the first connecting portion 724b away from the first gear portion 724a passes through the transmission hole 91, extends out of the housing 9 and is connected with the first transmission shaft 61, or, an end of the first transmission shaft 61 extends into the transmission hole 91 and is connected with an end of the first connecting portion 724b away from the first gear portion 724a. Generally, the first connecting portion 724b is clamped to the first transmission shaft 61 by the way of a clamping key and a clamping groove being matched, that is, the first connecting portion 724b is provided with a limit key, and the first transmission shaft 61 is correspondingly provided with a limit groove matched with the limit key, and the limit key is clamped to the limit groove; or, the first connecting portion 724b is provided with a limit groove, and the first transmission shaft 61 is correspondingly provided with a limit key matched with the limit slot, and the limit key is clamped with the limit groove.

The second output gear 824 includes a second gear portion 824a and a second connection portion 824b. The second gear portion 824a is connected in mesh with the second connection gear 824b. One end of the second connection portion 824b is fixedly connected to the second gear portion 824a and the other end of the second connection portion 824b is connected to the second transmission shaft 61 through the transmission hole 91. "The other end of the second connection portion 824bbeing connected to the second transmission shaft 62 through the transmission hole 91" means that an end of the second connecting portion 824b away from the second gear portion 824a passes through the transmission hole 91, extends out of the housing 9 and is connected with the second transmission shaft 62, or, an end of the second transmission shaft 61 extends into the transmission hole 91 and is connected with an end of the second connecting portion 824b away from the second gear portion 824a. Generally, the second connecting portion 824b is clamped to the second transmission shaft 62 by the way of the clamping key and the clamping groove being matched, that is, the second connecting portion 824b is provided with a limit key, and the second transmission shaft 62 is correspondingly provided with a limit groove matched with the limit key, and the limit key is clamped to the limit groove; or, the second connecting portion 824b is provided with a limit groove, the second transmission shaft 62 is correspondingly provided with a limit key matched with the limit groove, and the limit key is clamped with the limit groove.

Furthermore, referring to FIGs. 22 and 23, a first sealing ring 100 is provided between the first transmission shaft 61 and the transmission hole 91. The first sealing ring 100 is sleeved on the first transmission shaft 61. In this way, the sealing performance of the connection between the first transmission shaft 61 and the housing 9 is improved, thereby improving sealing performance of the whole control valve 1000.

In an embodiment, referring to FIG. 22 and FIG. 23, a second sealing ring 100 is provided between the second connection portion 824b and the transmission hole 91. The second sealing ring 100 is sleeved on the second connection portion 824b. In this way, sealing performance of the connection between the second output gear 824 and the housing 9 is improved, thereby improving sealing performance of the whole control valve 1000.

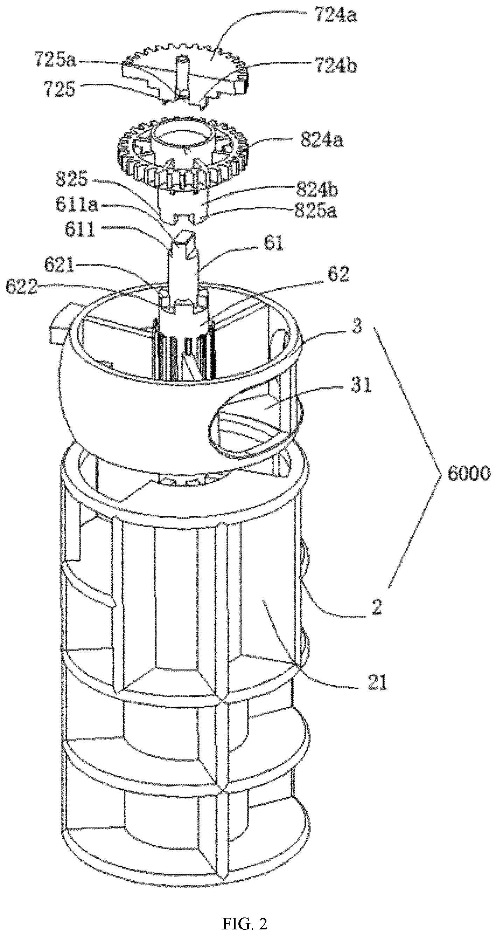

Referring to FIGs. 2, 3, 21, 22 and 23, the present invention provides a driver 60. The driver 60 is applied in the control valve 1000 to drive the valve core assembly 6000 in the control valve 1000 to rotate. The control valve 1000 is installed on new energy vehicles, for example, the control valve 1000 is applied to pure electric vehicles or hybrid electric vehicles as a part of the thermal management system to realize the function of medium commutation or flow regulation. In this embodiment, the control valve 1000 is installed on a manifold, and is mainly used to realize reversing function of a medium, which is liquid such as water. Of course, in other embodiments, the control valve 1000 can also be used for circulation of other media such as gas.

The existing drivers of control valves usually have some problems, such as low driving efficiency, low compatibility and complex structure.

Referring to FIGs. 2, 3, and 21to 23, the present invention provides a driver 60. The driver 60 is applied in the control valve 1000. The control valve 1000 includes at least two valve core assemblies 6000 disposed coaxially. The driver 60 includes a housing 9, an actuator mechanism 70, and at least two output wheels 4000. The housing 9 includes a cavity 92. The actuator mechanism 70 and the at least two output wheels 4000 are disposed in the cavity 92. The actuator mechanism 70 is coupled to the at least two output wheels 4000 and configured for driving the at least two output wheels 4000 to rotate. The at least two output wheels 4000 are respectively connected to and coaxially provided in correspondence with the at least two valve core assemblies 6000, the at least two output wheels 4000 are capable of operating independently and driving the at least two valve core assemblies 6000 to rotate respectively.

It should be noted that in this embodiment, at least two of the output wheel 4000 are respectively connected to at least two of the valve core assembly 6000 and coaxially arranged. And at least two of the output wheels 4000 can operate independently of each other to drive the valve core assembly 6000 to rotate, so that at least two of the output wheels 4000 on the same axis can drive at least two of the valve core assemblies 6000 to move independently. At least two of the valve core assemblies 6000 have no influence on each other, thus improving the driving efficiency of the driver 60.

In this embodiment, the driver 60 includes at least two coaxially arranged output wheels 4000. At least two of the output wheel 4000 can operate independently of each other to drive the valve core assembly 6000 to rotate. And at least two of the valve core assemblies 6000 can rotate at different angles to enable the control valve 1000 to form various communication modes. Specifically, assuming that the control valve 1000 includes two the valve core assembly 6000, then assuming that the first valve core can have *a* communication modes by rotating at different angles, and the second valve core can have b communication modes by rotating at different angles, the whole control valve 1000 can realize *a***b* communication modes. At least two of the output wheels 4000 are coaxially arranged. The rotation between the coaxial output wheels 4000 does not interfere with each other. In this way, the arrangement of the actuator mechanism 70 and the output wheel 4000 in the driver 60 the housing 9 can be made more compact, and the compatibility of the control valve 1000 can be improved on the premise of compact structure, so that more circulation channels can be realized at the same time.

Referring to FIGs. 21 to23, the actuator mechanism 70 at least includes a second motor component 81, a second reducer component 82, a first motor component 71 and a first reducer component 72. The second reducer component 82 is connected to the second motor component 81. The at least two output wheels 4000 includes a second output gear 824. The second reducer component 82 is connected to the second output gear 824. The second motor component 81 is capable of reducing an output rotational speed and driving the second output gear 824 to rotate through the second reducer component 82. The first reducer component 72 is connected to the first motor component 71. The at least two output wheels 4000 further includes a first output gear 724. The first output gear 724 is connected to the first reducer component 72. The first motor component 71 is capable of reducing an output rotational speed and driving the first output gear 724 to rotate through the first reducer component 72.

It should be noted that the control accuracy of the valve core assembly 6000 corresponding to the second motor component 81 and the first motor component 71 is greatly improved by the second motor component 81 and the first motor component 71. By providing the second reducer component 82 and the first reducer component 72, it is beneficial to decrease of the rotation speed of the second motor component 81 and the first motor component 71 in a reasonable range. It can avoid the control of the corresponding valve core assembly 6000 due to too fast rotation speed of the corresponding output wheel 4000.

It is worth noting that, "the actuator mechanism 70 at least including the second motor component 81, the second reducer component 82, the first motor component 71 and the first reducer component 72" means that, the actuator mechanism 70 includes at least two sets of interconnected motor components and reducer components. In other embodiments, the actuator mechanism 70 may also include three sets, four sets, five sets or even more interconnected motor assemblies and reducer assemblies. For example, when the actuator mechanism 70 includes three sets of motor components and reducer components which are connected with each other, there are also three corresponding output wheels 4000, and the three output wheels 4000 are coaxial and nested with each other, so that the rotation of the three output wheels 4000 will not interfere with each other, which is not limited here.

Referring to FIGs. 21 to 23, the second motor component 81 includes a second motor 811 and a second worm 812. The second worm 812 is connected to an output shaft of the second motor 811. The second reduction gear component 82 includes a second worm gear 821, a second secondary gear 822, a second connecting gear 823 and a second output gear 824 connected in sequential mesh. The second worm gear 821 is connected in mesh to the second worm 812, the second output gear 824 is a gear, and the second connecting section 823 is connected in mesh to the second output gear 824. The first motor component 71 includes a first motor 711 and a first worm 712. The first worm 712 is connected to an output shaft of the first motor 711. The first reducer component 72 includes a first worm gear 721, a first secondary gear 722, a first connecting gear 723 and a first output gear 724 connected in sequential meshes. The first worm gear 721 is connected in mesh to the first worm 712. The first output gear 724 is a gear, and the first connecting gear 723 is connected in mesh to the first output gear 724.

It should be noted that, by providing the second worm 812 and the second worm gear 821, it is beneficial to connection between the second motor 811 and the second secondary gear 822. And the second worm 812 and the second worm gear 821 can have greater transmission, in other words, an angular velocity of the second worm gear 821 is much smaller than that of the second worm 812, which is beneficial to decrease of the rotational speed of the second motor 811. By providing the second secondary gear 822, the output speed of the second motor 811 can be further reduced, which is beneficial to the precise control of the rotation angle of the second valve core 3 by the control valve 1000. Similarly, by providing the first worm 712 and the first worm gear 721, it facilitates the connection between the first motor 711 and the first secondary gear 722, and enables the first worm 712 and the first worm gear 721 to have a larger transmission ratio. In other words, the angular velocity of the first worm gear 721 is much smaller than that of the first worm gear 712, which is beneficial to reduce the rotational speed of the first motor 711. By providing the first secondary gear 722, the output speed of the first motor 711 can be further reduced, which is beneficial to the precise control of the rotation angle of the first valve core 2 by the control valve 1000.

Furthermore, referring to FIGs. 21 to 23, the second motor component 81 further includes a second magnetic ring 813 which is sleeved on an output shaft of the second motor 811. And the second magnetic ring 813 is located away from the second reducer component 82 relative to the second worm 812. The second magnetic ring 813 and a wire passing through the second magnetic ring 813 are equivalent to increasing the inductance of the wire to some extent. The second magnetic ring 813 has a high loss coefficient, which can convert high-frequency electromagnetic energy into heat energy through eddy current, thus inhibiting passage of high-frequency signals, so the second magnetic ring 813 can absorb and consume the energy of high-frequency signals, thus playing an anti-interference role. Similarly, the first motor component 71 further includes the first magnetic ring 713. The first magnetic ring 713 is sleeved on the output shaft of the first motor 711. The first magnetic ring 713 is arranged away from the first reducer component 72 relative to the first worm 712. The first magnetic ring 713 and a wire passing through the first magnetic ring 713 are equivalent to increasing the inductance of the wire to some extent. The first magnetic ring 713 has a high loss coefficient, which can convert high-frequency electromagnetic energy into heat energy through eddy current, thus inhibiting the passage of high-frequency signals, so the first magnetic ring 713 can absorb and consume the energy of high-frequency signals, thus playing an anti-interference role.

Furthermore, referring to FIGs. 21 to 23, the second secondary gear 822 includes a second large-diameter gear 822a and a second small-diameter gear 822b, the second large-diameter gear822a and the second small-diameter gear 822b are coaxially provided and fixedly connected, a diameter of the second large-diameter gear 822a is greater than that of the second small-diameter gear 822b. The second large-diameter gear 822a is connected in mesh with the second worm gear 821. The second small-diameter gear 822b is connected in mesh with the second connecting gear 823. Furthermore, the first secondary gear 722 includes a first large-diameter gear 722a and a first small-diameter gear 722b. The first large-diameter gear 722a and the first small-diameter gear 722b are coaxially provided and fixedly connected. A diameter of the first large-diameter gear 722a is greater than that of the first small-diameter gear 722b. The first large-diameter gear 722a is connected in mesh with the first worm gear 721. The first small-diameter gear 722b is connected in mesh with the first connecting gear 723.

In this way, the structure of the second secondary gear 822 is simpler, which is conducive to decrease of the assembly difficulty of the second actuator assembly 8, thus improving the assembly efficiency of the entire control valve 1000. Similarly, the structure of the first secondary gear 722 is simpler, which is conducive to decrease of the assembly difficulty of the first actuator assembly 7, thus improving the assembly efficiency of the entire control valve 1000.

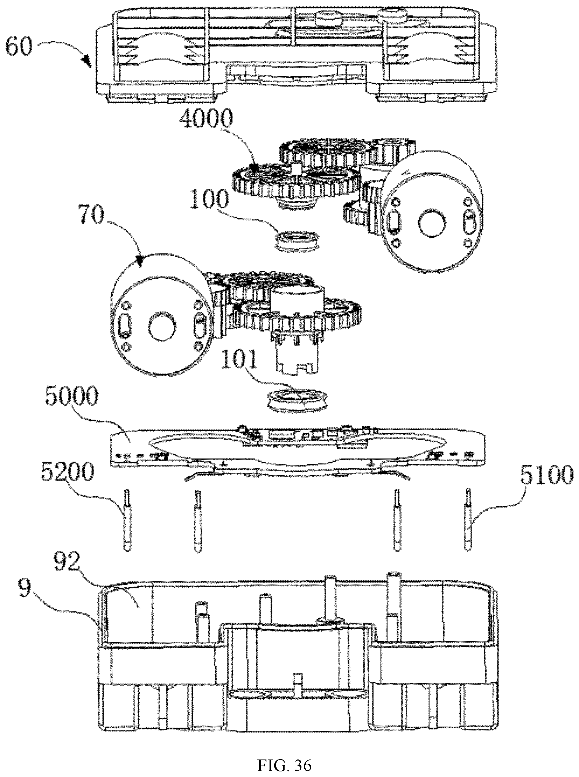

Furthermore, referring to FIGs. 21, 22, 23 and 36, the driver 60 further includes the circuit board 5000, the positive wire 5100 and the negative wire 5200. The actuator mechanism 70 and the output wheel 4000 are both installed on the circuit board 5000 and connected to the circuit board 5000 through the positive wire 5100 and the negative wire 5200.

In this embodiment, because the connection between the motor assembly and the reducer assembly has the characteristic of locking and limiting, that is, when the second motor component 81 drives the second reducer component 82 to rotate and drives the second output gear 824 to rotate, the first output gear 724 does not drive the first reducer component 72 to rotate with the rotation of the second output gear 824. This situation not only because the second output gear 824 and the first output gear 724 are nested with each other, and their movements are independent and do not interfere with each other, but also because the motor assembly and reducer assembly are locked, only the forward rotation of the motor assembly, reducer assembly and the output wheel 4000 can be realized, but the reverse rotation of the output wheel 4000, reducer assembly and motor assembly can not be realized.

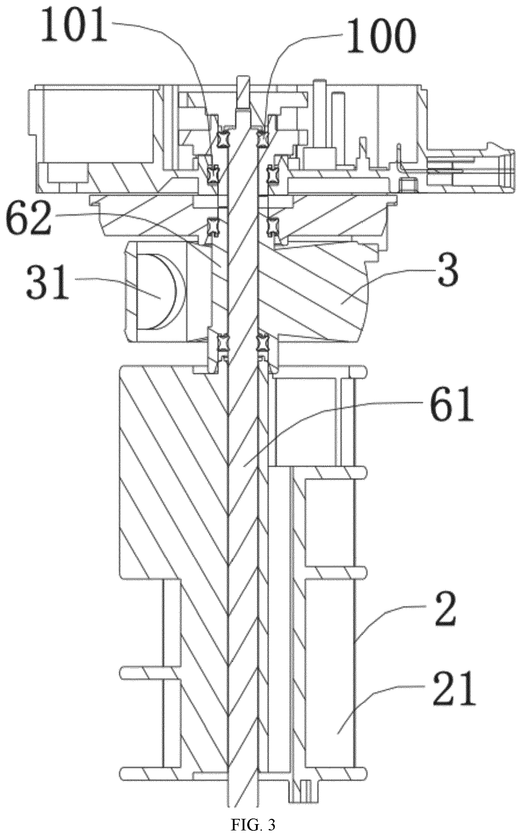

Referring to FIGs. 2 and 3, the present invention provides a control valve 1000. The control valve 1000 includes a valve body 1, at least two valve core assemblies 6000 and a driver 60. The at least two valve core assemblies 6000 are coaxially arranged and arranged in the valve body 1.

Referring to FIGs. 2 and 3, the at least two of the valve core assemblies 6000 at least includes a second transmission shaft 62, a second valve core 3, a first transmission shaft 61 and a first valve core 2. The second transmission shaft 62 is fixedly connected with the second valve core 3 and the first transmission shaft 61 is fixedly connected with the first valve core 2. The second transmission shaft 62 is sleeved outside the first transmission shaft 61. The first transmission shaft 61 and the second transmission shaft 62 are coaxially arranged. The second output gear 824 is connected with the second transmission shaft 62 to drive the second transmission shaft 62 to rotate. The first output gear 724 is connected with the first transmission shaft 61 to drive the first transmission shaft 61 to rotate.

Referring to FIGs. 2 and 3, the second output gear 824 includes a second gear portion 824a and a second connection portion 824b. The second gear portion 824a is connected in mesh with the second connection gear 824b. The housing 9 is provided with a transmission hole 91. One end of the second connection portion 824b is fixedly connected to the second gear portion 824a and the other end of the second connection portion 824b is connected to the second transmission shaft 61 through the transmission hole 91. "The other end of the second connection portion 824b being connected to the second transmission shaft 62 through the transmission hole 91" means that, an end of the second connecting portion 824b away from the second gear portion 824a passes through the transmission hole 91, extends out of the housing 9 and is connected with the second transmission shaft 62, or, an end of the second transmission shaft 61 extends into the transmission hole 91 and is connected with an end of the second connecting portion 824b away from the second gear portion 824a. The first output gear 724 includes a first gear portion 724a and a first connection portion 724b. The first gear portion 724a is connected in mesh with the first connection gear 724b. One end of the first connection portion 724b is fixedly connected to the first gear portion 724a and the other end of the first connection portion 724b is connected to the first transmission shaft 61 through the transmission hole 91. "The other end of the first connection portion 724b being connected to the first transmission shaft 61 through the transmission hole 91" means that, an end of the first connecting portion 724b away from the first gear portion 724a passes through the transmission hole 91, extends out of the housing 9 and is connected with the first transmission shaft 61, or, an end of the first transmission shaft 61 extends into the transmission hole 91 and is connected with an end of the first connecting portion 724b away from the first gear portion 724a.

The second transmission shaft 62 is driven to rotate by the second output gear 824, so that the first output gear 724 drives the first transmission shaft 61 to rotate. Therefore, although the second transmission shaft 62 and the first transmission shaft 61 are coaxially arranged, they cannot affect rotation each other. Furthermore, driven by the second transmission shaft 62 and the first transmission shaft 61, the second valve core 3 and the first valve core 2 can rotate independently.

Referring to FIGs. 2 and 3, an end of the second connecting portion 824b adjacent to the second transmission shaft 62 is provided with a second fitting portion 825. An end of the second transmission shaft 62 adjacent to the second connecting portion 824b is provided with a third fitting portion 621, and the second fitting portion 825 and the third fitting portion 621 are mutually matched and fixedly connected. The first connecting portion 724b is provided with a first fitting portion 725 at an end adjacent to the first transmission shaft 61. An end of the first transmission shaft 61 adjacent to the first connecting portion 724b is provided with a first transmission shaft 611, and the first fitting portion 725 and the first transmission shaft 611 are fixedly connected with each other.

Referring to FIGs. 2 and 3, the second fitting portion 825 includes at least two second projections 825a arranged in the circumferential direction of the second connecting portion 824b. The third fitting portion 621 includes at least two third grooves 622 along the circumferential direction of the second transmission shaft 62, and the second protrusion 825a extends into the third groove 622 for concave-convex fit connection. The first fitting portion 725 includes a first groove 725a, the first transmission shaft 611 includes a fourth protrusion 611a, and the fourth protrusion 611a extends into the first groove 725a for concave-convex fit connection.

In this embodiment, referring to FIGs. 2 and 3, four second projections 825a are arranged at intervals along the circumferential direction of the end face of the second connecting portion 824b. Correspondingly, four third grooves 622 are arranged at intervals along the end face of the second transmission shaft 62. The second protrusions 825a and the third grooves 622 are matched and clamped to realize the connection between the second connecting portion 824b and the second transmission shaft 62. The connection between the first transmission shaft 61 and the first connecting portion 724b is the same, and will not be repeated here.

It should be noted that an arrangement mode and an arrangement shape among the second fitting portion 825, the third fitting portion 621, the first fitting portion 725 and the first transmission shaft 611 are not limited to the above two, and they can also be other shapes, and are not limited here.

Referring to FIGs. 2 and 3, a first sealing ring 100 is provided between the first transmission shaft 61 and the transmission hole 91, and the first sealing ring 100 is sleeved on the first transmission shaft 6. Alternatively, a second sealing ring 100 is provided between the second connection portion 824b and the transmission hole 91, and the second sealing ring 100 is sleeved on the second connection portion 824b. In this way, sealing performance of connection between the second output gear 824 and the first output gear 724 and the second transmission shaft 62 and the first transmission shaft 61 is improved, thereby improving the sealing performance of the whole control valve 1000. In other embodiments, the control valve can includes at least two valve core assemblies, transmission shafts corresponding to the at least two valve core assemblies, and output wheels corresponding to the at least two transmission shafts. An outer sleeve transmission shaft can be added outside the first transmission shaft to realize at least two coaxial transmission shafts, and at least two output wheels are correspondingly limited and matched with the at least two transmission shafts to realize torque power transmission.

Referring to FIGs. 2 and 3, the driver 60 provided by the present invention enables at least two of the output wheel 4000 to be respectively connected to at least two of the valve core assembly 6000 and coaxially arranged. And at least two of the output wheels 4000 can operate independently to drive the valve core assembly 6000 to rotate, so that at least two of the output wheels 4000 on the same axis can drive at least two of the valve core assemblies 6000 to move independently. At least two of the valve core assemblies 6000 have no influence on each other, thus improving the driving efficiency of the driver 60. The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the appended claims.

## Claims

1. A control valve (1000) comprising a valve body (1) provided with a valve cavity (11), wherein a plurality of communicating holes (121) are provided in a side wall of the valve body (1), the plurality of communicating holes (121) penetrate through the side wall of the valve body (1) and are in communication with the valve cavity (11);
a first valve core (2) is rotatably disposed at one end of the valve cavity (11), the first valve core (2) is provided with a plurality of first passages (21) and a plurality of second passages (22) on a circumferential side of the first valve core (2); and
a second valve core (3) is rotatably disposed at the other end of the valve cavity (11), and the second valve core (3) is coaxially disposed with the first valve core (2), the second valve core (3) is provided with a third passage (31);
the plurality of communicating holes (121) comprise a plurality of first flow channels (121a) and a plurality of second flow channels (121b); on a condition that the first valve core (2) is rotated by a first predetermined angle, each of the plurality of first passages (21) is capable of being in communication with corresponding two of the plurality of first flow channels (121a) and each of the plurality of second passages (22) is capable of being in communication with corresponding one of the plurality of first flow channels (121a);
on a condition that the second valve core (3) is rotated by a second predetermined angle, the third passage (31) is capable of being in communication with one or two of the plurality of second flow channels (121b) and the third passage (31) is capable of being correspondingly in communication with the plurality of second passages (22), so that one of the plurality of first flow channels (121a) is correspondingly in communication with one or two of the plurality of second flow channels (121b) through the plurality of second passages (22) and the third passage (31);
**characterized by** further comprising a first transmission shaft (61), fixedly connected to a first valve core (2);
a second transmission shaft (62), fixedly connected to the second valve core (3), the second transmission shaft (62) being sleeved outside of the first transmission shaft (61), and the second transmission shaft (62) being coaxially disposed with the first transmission shaft (61);
a first actuator assembly (7) coupled to the first transmission shaft (61) to drive the first transmission shaft (61) to rotate; and
a second actuator assembly (8) coupled to the second transmission shaft (62) to drive the second transmission shaft (62) to rotate; and
the first actuator assembly (7) comprises a first motor component (71) and a first reducer component (72), the first reducer component (72) is connected to the first motor component (71) and the first transmission shaft (61), the first motor component (71) is capable of reducing an output rotational speed and driving the first transmission shaft (61) to rotate through the first reducer component (72);
the second actuator assembly (8) comprises a second motor component (81) and a second reducer component (82), the second reducer component (82) is connected to the second motor component (81) to the second transmission shaft (62), the second motor component (81) is capable of reducing an output rotational speed and driving the second transmission shaft (62)to rotate through the second reducer component (82);
the first motor component (71) comprises a first motor (711) and a first worm (712), the first worm (712) is connected to an output shaft of the first motor (711), the first reducer component (71) comprises a first worm gear (721), a first secondary gear (722), a first connecting gear (723) and a first output gear (724) connected in sequential mesh, the first worm gear (721) is connected in mesh to the first worm (712), the first output gear (724) is clamped to an end of the first transmission shaft (61) extending out of the second transmission shaft (62);
the second motor component (81) comprises a second motor (811) and a second worm (812), the second worm (812) is connected to an output shaft of the second motor (811), the second reduction component (82) comprises a second worm gear (821), a second secondary gear (822), a second connecting gear (823) and a second output gear (824) connected in sequential mesh, the second worm gear (821) is connected in mesh to the second worm (812), the second output gear (824) is sleeved on a part of the first transmission shaft (61) extending out of the second transmission shaft (62), and the second output gear (824) is clamped to an end of the second transmission shaft (62) away from the first valve core (2).

2. The control valve (1000) of claim 1, wherein the number of the plurality of first flow channels (121a) is 2n, wherein n is greater than or equal to 2, the number of the plurality of second flow channels (121b) is 2;
each of the plurality of first passages (21) is capable of being in communication with different two of the plurality of first flow channels (121a) to form less than or equal to n-1 two-way flow paths, and one of the plurality of first flow channels (121a) is capable of being in communication with one of the plurality of second flow channels (121b) through corresponding one of the plurality of second passages (22) and the third passage (31) to form a two-way flow path;
or, each of the plurality of first passages (21) is capable of being in communication with different two of the plurality of first flow channels (121a) to form less than or equal to n-1 two-way flow paths, and one of the plurality of first flow channels (121a) is capable of being in communication with two of the plurality of second flow channels (121b) through corresponding one of the plurality of second passages (22) and the third passage (31) to form a three-way flow path.

3. The control valve (1000) of claim 2, wherein the plurality of communicating holes (121) are distributed in two rows in the valve body, each row of the plurality of communicating holes (121) comprises n of the plurality of first flow channels (121a) and one of the plurality of second flow channels (121b), and wherein two of the plurality of second flow channels (121b) corresponding to two rows are disposed at the same end of the valve body (1).

4. The control valve (1000) of claim 1, wherein the first valve core (2) is a columnar structure, the first valve core (2) is provided with a plurality of cut-off grooves (23), each of the plurality of the cut-off grooves (23) is capable of closing corresponding one of the plurality of first flow channels (121a), the plurality of first passages (21) comprise a plurality of axial two-way slots (211) and a plurality of circumferential two-way slots (212), each of the plurality of axial two-way slots (211) is capable of being correspondingly in communication with two of the plurality of first flow channels (121a) disposed in an axial direction of the valve body (1), each of the plurality of circumferential two-way slots (212) is capable of being correspondingly in communication with two of the plurality of first flow channels (121a) disposed in a circumferential direction of the valve body (1);
the first valve core (2) comprises a first fan-shaped section (24), a second fan-shaped section (25), a third fan-shaped section (26), a fourth fan-shaped section (27) and a fifth fan-shaped section (28) having a fan-shaped cross-section and sequentially interconnected along a circumferential direction of the first valve core (2);
one end of the first fan-shaped section (24) away from the second valve core (3) is provided with two of the plurality of circumferential two-way slots (212) distributed along the circumferential direction of the valve body (1), and the other end of the first fan-shaped section (24) adjacent to the second valve core (3) is provided with one of the plurality of axial two-way slots (211), one of the plurality of cut-off grooves (23), and one of the plurality of second passages (22), wherein the one of the plurality of axial two-way slots (211) is located on a side of the first fan-shaped section (24) adjacent to the second fan-shaped section (25), both the one of the plurality of cut-off grooves (23) and the one of the plurality of second passages (22) are located along the axial direction of the first valve core (2) and on a side of the first fan-shaped section (24) adjacent to the fifth fan-shaped section (28), and the one of the plurality of second passages (22) is adjacent to the second valve core (3);
the second fan-shaped section (25) is in mirror image symmetry with the first fan-shaped section (24);
the third fan-shaped section (26) is provided with one of the plurality of axial two-way slots (211), one of the plurality of cut-off grooves (23) and one of the plurality of second passages (22) in a direction from away from the second valve core (3) to towards the second valve core (3);
the fourth fan-shaped section (27) is provided with two of the plurality of axial two-way slots (211) in sequence in a direction from away from the second valve core (3) to towards the second valve core (3); and
the fifth fan-shaped section (28) is provided with one of the plurality of axial two-way slots (211), one of the plurality of cut-off grooves (23) and one of the plurality of second passages (22) in a direction from away from the second valve core (3) to towards the second valve core (3).

5. The control valve (1000) of claim 1, wherein the valve body (1) comprises a side wall portion (12) and a mounting portion (13), the side wall portion (12) of the valve body (1) is a side wall of the valve cavity (11) or at least a part of the side wall of the valve cavity (11), the plurality of communicating holes (121) are located in the side wall portion (12) of the valve body (1), one side of the mounting portion (13) of the valve body (1) is fixedly connected to the side wall portion (12) of the valve body (1), and the other side, away from the side wall portion (12), of the mounting portion (13) of the valve body (1) is provided with a mounting plane (131), and the mounting plane (131) is provided with a valve port (132) correspondingly in communication with the plurality of communicating holes (121).

6. The control valve (1000) of claim 5, further comprising a sealing gasket (4), wherein the sealing gasket (4) is disposed between the first valve core (2) and the side wall portion (12) of the valve body (1), the sealing gasket (4) is provided with a notch (41) correspondingly in communication with the plurality of first flow channels (121a), one surface of the sealing gasket (4) in a thickness direction of the sealing gasket (4) is in contact with and sealing fit with a surface of the first valve core (2), and the other surface of the sealing gasket (4) in the thickness direction of the sealing gasket (4) is sealingly connected to an inner surface of the side wall portion (12) of the valve body (1); and/or
the control valve (1000) further comprises a sealing cylinder (5), wherein the sealing cylinder (5) is disposed between the second valve core (3) and the side wall portion (12) of the valve body (1), the sealing cylinder (5) is correspondingly in communication with the plurality of second flow channels (121b) and the third passage (31), one end of the sealing cylinder (5) is in contact with and sealingly matched with an outer surface of the second valve core (3), and the other end of the sealing cylinder (5) is sealingly connected to an inner surface of the side wall portion (12).

7. The control valve (1000) of claim 1, wherein the second valve core (3) comprises a side plate (32) and an end plate (33), the side plate (32) is in a circle shape, the end plate (33) is disposed at one end of the side plate (32) adjacent to the first valve core (2), and an accommodating cavity (34) is formed by the side plate (32) and the end plate (33) being surrounded;
the side plate (32) is provided with an open hole (321) through which the second valve core (3) is in communication with the plurality of second flow channels (121b), the end plate (33) is provided with an opening (331) through which the second valve core (3) is in communication with the plurality of second passages (22), and the third passage (31) is formed by the open hole (321), the accommodating cavity (34) and the opening (331).

8. The control valve (1000) of claim 1, wherein the first secondary gear (722) comprises a first large-diameter gear (722a) and a first small-diameter gear (722b), the first large-diameter gear (722a) and the first small-diameter gear (722b) are coaxially provided and fixedly connected, a diameter of the first large-diameter gear (722a) is greater than that of the first small-diameter gear (722b), the first large-diameter gear (722a) is connected in mesh with the first worm gear (721), the first small-diameter gear (722b) is connected in mesh with the first connecting gear (723); and/or
the second secondary gear (822) comprises a second large-diameter gear (822a) and a second small-diameter gear (822b), the second large-diameter gear (822a) and the second small-diameter gear (822b) are coaxially provided and fixedly connected, a diameter of the second large-diameter gear (822a) is greater than that of the second small-diameter gear (822b), the second large-diameter gear (822a) is connected in mesh with the second worm gear (821), the second small-diameter gear (822b) is connected in mesh with the second connecting gear (823).

9. The control valve (1000) of claim 1, further comprising a housing (9), wherein both the first actuator assembly (7) and the second actuator assembly (8) are disposed in the housing (9), the housing (9) is provided with a transmission hole (91),
the first output gear (724) comprises a first gear portion (724a) and a first connection portion (724b), the first gear portion (724a) is connected in mesh with the first connection gear (723), one end of the first connection portion (724b) is fixedly connected to the first gear portion (724a) and the other end of the first connection portion (724b) is connected to the first transmission shaft (61) through the transmission hole (91).
the second output gear (824) comprises a second gear portion (824a) and a second connecting portion (824b), the second gear portion (824a) is connected in mesh with the second connecting gear (823), one end of the second connecting portion (824b) is fixedly connected to the second gear portion (824a) and the other end of the second connecting portion (824b) is connected to the second transmission shaft (62) through the transmission hole (91).

10. The control valve (1000) of claim 9, wherein a first sealing ring is provided between the first transmission shaft and the transmission hole and the first sealing ring is sleeved on the first transmission shaft;
and/or, a second sealing ring is provided between the second connection portion and the transmission hole and the second sealing ring is sleeved on the second connection portion.

11. A driver (60), comprised and applied in a control valve, wherein the control valve comprises at least two valve core assemblies (6000) disposed coaxially, the driver (60) comprises a housing (9), an actuator mechanism (70), and at least two output wheels (4000), the housing (9) comprises a cavity (92), the actuator mechanism (70) and the at least two output wheels (4000) are disposed in the cavity (92), the actuator mechanism (70) is coupled to the at least two output wheels (4000) and configured for driving the at least two output wheels (4000) to rotate; **characterized in that**
the control valve is the control valve (1000) of any one of claims 1 to 10, the at least two output wheels (4000) are respectively connected to and coaxially provided in correspondence with the at least two valve core assemblies (6000), and the at least two output wheels (4000) are capable of operating independently and driving the at least two valve core assemblies (6000) to rotate respectively.

12. The driver of claim 11, wherein the actuator mechanism (70) at least comprises a second motor component (81) and a second reducer component (82), the second reducer component (82) is connected to the second motor component (81), the at least two output wheels (4000) comprise a second output gear (824), the second reducer component (82) is connected to the second output gear (824), the second motor component (81) is capable of reducing an output rotational speed and driving the second output gear (824) to rotate through the second reducer component (82);
the actuator mechanism (70) further comprises a first motor component (71) and a first reducer component (72), the first reducer component (72) is connected to the first motor component (71), the at least two output wheels (4000) further comprises a first output gear (724), the first output gear (724) is connected to the first reducer component (72), the first motor component (71) is capable of reducing an output rotational speed and driving the first output gear (724) to rotate through the first reducer component (72);
the second motor component (81) comprises a second motor (811) and a second worm (812), the second worm (812) is connected to an output shaft of the second motor (811), the second reduction component (82) comprises a second worm gear (821), a second secondary gear (822), a second connecting gear (823) and a second output gear (824) connected in sequential mesh, the second worm gear (821) is connected in mesh to the second worm (812), the second output gear (824) is a cogwheel, and the second connecting gear (823) is connected in mesh with the second output gear (824);
the first motor component (71) comprises a first motor (711) and a first worm (712), the first worm (712) is connected to an output shaft of the first motor (711), the first reducer component (71) comprises a first worm gear (721), a first secondary gear (722), a first connecting gear (723) and a first output gear (724) connected in sequential mesh, the first worm gear (721) is connected in mesh to the first worm (712), the first output gear (724) is a cogwheel, and the first connecting gear (723) is connected in mesh with the first output gear (724).

13. The driver of claim 12, wherein the second output gear (824) comprises a second gear portion (824a) and a second connecting portion (824b), the second gear portion (824a) is connected in mesh with the second connecting gear (823), the second connecting portion (824b) is fixedly connected to the second gear portion (824a);
the first output gear comprises a first gear portion (724a) and a first connection portion (724b), the first gear portion (724a) is connected in mesh with the first connection gear (723), the first connection portion (724b) is fixedly connected to the first gear portion (724a); and
the second gear portion is sleeved on and connected to the first connecting portion through the second connecting portion;
the second secondary gear comprises a second large-diameter gear (822a) and a second small-diameter gear (822b), the second large-diameter gear (822a) and the second small-diameter gear (822b) are coaxially provided and fixedly connected, a diameter of the second large-diameter gear (822a) is greater than that of the second small-diameter gear (822b), the second large-diameter gear (822a) is connected in mesh with the second worm gear (821), and the second small-diameter gear (822b) is connected in mesh with the second connecting gear (823);
and/or, the first secondary gear (722) comprises a first large-diameter gear (722a) and a first small-diameter gear (722b), the first large-diameter gear (722a) and the first small-diameter gear (722b) are coaxially provided and fixedly connected, a diameter of the first large-diameter gear (722a) is greater than that of the first small-diameter gear (722b), the first large-diameter gear (722a) is connected in mesh with the first worm gear (721), and the first small-diameter gear (722b) is connected in mesh with the first connecting gear (723).

## Patentansprüche

1. Steuerventil (1000) mit einem Ventilkörper (1), der mit einem Ventilhohlraum (11) versehen ist, wobei eine Vielzahl von Verbindungslöchern (121) in einer Seitenwand des Ventilkörpers (1) vorgesehen sind, die Vielzahl von Verbindungslöchern (121) die Seitenwand des Ventilkörpers (1) durchdringen und mit dem Ventilhohlraum (11) in Verbindung stehen;
wobei ein erster Ventilkern (2) drehbar an einem Ende des Ventilhohlraums (11) angeordnet ist, der erste Ventilkern (2) mit einer Vielzahl von ersten Kanälen (21) und einer Vielzahl von zweiten Kanälen (22) auf einer Umfangsseite des ersten Ventilkerns (2) versehen ist; und
wobei ein zweiter Ventilkern (3) drehbar am anderen Ende des Ventilhohlraums (11) angeordnet ist und der zweite Ventilkern (3) koaxial zu dem ersten Ventilkern (2) angeordnet ist, wobei der zweite Ventilkern (3) mit einem dritten Kanal (31) versehen ist;
wobei die Vielzahl von Verbindungslöchern (121) eine Vielzahl von ersten Strömungskanälen (121a) und eine Vielzahl von zweiten Strömungskanälen (121b) umfassen; wobei unter der Bedingung, dass der erste Ventilkern (2) um einen ersten vorbestimmten Winkel gedreht wird, jeder der Vielzahl von ersten Kanälen (21) mit entsprechenden zwei der Vielzahl von ersten Strömungskanälen (121a) in Verbindung stehen kann und jeder der Vielzahl von zweiten Kanälen (22) mit einem entsprechenden der Vielzahl von ersten Strömungskanälen (121a) in Verbindung stehen kann;
wobei unter der Bedingung, dass der zweite Ventilkern (3) um einen zweiten vorbestimmten Winkel gedreht wird, der dritte Kanal (31) mit einem oder zwei der Vielzahl von zweiten Strömungskanälen (121b) in Verbindung stehen kann und der dritte Kanal (31) entsprechend mit der Vielzahl von zweiten Kanälen (22) in Verbindung stehen kann, sodass einer der Vielzahl von ersten Strömungskanälen (121a) entsprechend mit einem oder zwei der Vielzahl von zweiten Strömungskanälen (121b) durch die Vielzahl von zweiten Kanälen (22) und den dritten Kanal (31) in Verbindung stehen kann;
**dadurch gekennzeichnet, dass** es ferner eine erste Getriebewelle (61) umfasst, die fest mit einem ersten Ventilkern (2) verbunden ist;
wobei eine zweite Getriebewelle (62), die fest mit dem zweiten Ventilkern (3) verbunden ist, außen auf die erste Getriebewelle (61) aufgeschoben ist, und die zweite Getriebewelle (62) koaxial zu der ersten Getriebewelle (61) angeordnet ist;
wobei eine erste Betätigungsanordnung (7) mit der ersten Getriebewelle (61) gekoppelt ist, um die erste Getriebewelle (61) in Drehung zu versetzen; und
wobei eine zweite Betätigungsanordnung (8) mit der zweiten Getriebewelle (62) gekoppelt ist, um die zweite Getriebewelle (62) in Drehung zu versetzen; und
wobei die erste Betätigungsanordnung (7) eine erste Motorkomponente (71) und eine erste Reduzierkomponente (72) umfasst, die erste Reduzierkomponente (72) mit der ersten Motorkomponente (71) und der ersten Getriebewelle (61) verbunden ist, die erste Motorkomponente (71) eine Ausgangsdrehzahl verringern kann und die erste Getriebewelle (61) durch die erste Reduzierkomponente (72) in Drehung versetzen kann;
wobei die zweite Betätigungsanordnung (8) eine zweite Motorkomponente (81) und eine zweite Reduzierkomponente (82) umfasst, die zweite Reduzierkomponente (82) mit der zweiten Motorkomponente (81) und der zweiten Getriebewelle (62) verbunden ist, die zweite Motorkomponente (81) eine Ausgangsdrehzahl verringern kann und die zweite Getriebewelle (62) durch die zweite Reduzierkomponente (82) in Drehung versetzen kann;
wobei die erste Motorkomponente (71) einen ersten Motor (711) und eine erste Schnecke (712) umfasst, die erste Schnecke (712) mit einer Abtriebswelle des ersten Motors (711) verbunden ist, die erste Reduzierkomponente (71) ein erstes Schneckenrad (721), ein erstes Sekundärzahnrad (722), ein erstes Verbindungszahnrad (723) und ein erstes Abtriebszahnrad (724) umfasst, die sequentiell miteinander in Eingriff stehen, das erste Schneckenrad (721) mit der ersten Schnecke (712) in Eingriff steht, das erste Abtriebszahnrad (724) an ein Ende der ersten Getriebewelle (61) geklemmt ist, die aus der zweiten Getriebewelle (62) herausragt;
wobei die zweite Motorkomponente (81) einen zweiten Motor (811) und eine zweite Schnecke (812) umfasst, die zweite Schnecke (812) mit einer Abtriebswelle des zweiten Motors (811) verbunden ist, die zweite Reduzierkomponente (82) ein zweites Schneckenrad (821), ein zweites Sekundärzahnrad (822), ein zweites Verbindungszahnrad (823) und ein zweites Abtriebszahnrad (824) umfasst, die sequentiell miteinander in Eingriff stehen, das zweite Schneckenrad (821) mit der zweiten Schnecke (812) in Eingriff steht, das zweite Abtriebszahnrad (824) auf einen Teil der ersten Getriebewelle (61) aufgeschoben ist, der aus der zweiten Getriebewelle (62) herausragt, und das zweite Abtriebszahnrad (814) an ein Ende der zweite Getriebewelle (62) weg von dem ersten Ventilkern (2) geklemmt ist.

2. Steuerventil (1000) nach Anspruch 1, wobei die Zahl der Vielzahl von ersten Strömungskanälen (121a) 2n beträgt, wobei n größer oder gleich 2 ist, und die Zahl der Vielzahl von zweiten Strömungskanälen (121b) 2 ist;
wobei jeder der Vielzahl von ersten Kanälen (21) mit verschiedenen zwei der Vielzahl von ersten Strömungskanälen (121a) in Verbindung stehen kann, um weniger als oder gleich n-1 Zwei-Wege-Strömungskanäle zu bilden, und einer der Vielzahl von ersten Strömungskanälen (121a) mit einem der Vielzahl von zweiten Strömungskanälen (121b) durch einen entsprechenden der Vielzahl von zweiten Kanälen (22) und den dritten Kanal (31) in Verbindung stehen kann, um einen Zwei-Wege-Strömungsweg zu bilden,
oder, wobei jeder der Vielzahl von ersten Kanälen (21) mit verschiedenen zwei der Vielzahl von ersten Strömungskanälen (121a) in Verbindung stehen kann, um weniger als oder gleich n-1 Zwei-Wege-Strömungskanäle zu bilden, und einer der Vielzahl von ersten Strömungskanälen (121a) mit zwei der Vielzahl von zweiten Strömungskanälen (121b) durch einen entsprechenden der Vielzahl von zweiten Kanälen (22) und den dritten Kanal (31) in Verbindung stehen kann, um einen Drei-Wege-Strömungsweg zu bilden.

3. Steuerventil (1000) nach Anspruch 2, wobei die Vielzahl von Verbindungslöchern (121) in zwei Reihen in dem Ventilkörper verteilt sind, wobei jede Reihe der Vielzahl von Verbindungslöchern (121) n der Vielzahl von ersten Strömungskanälen (121a) und einen der Vielzahl von zweiten Strömungskanälen (121b) umfasst, und wobei zwei der Vielzahl von zweiten Strömungskanälen (121b), die zwei Reihen entsprechen, am selben Ende des Ventilkörpers (1) angeordnet sind.

4. Steuerventil (1000) nach Anspruch 1, wobei der erste Ventilkern (2) eine säulenartige Struktur darstellt, der erste Ventilkern (2) mit einer Vielzahl von Verschlussnuten (23) versehen ist, jede der Vielzahl von Verschlussnuten (23) einen entsprechenden der Vielzahl von ersten Strömungskanälen (121a) verschließen kann, die Vielzahl von ersten Kanälen (21) eine Vielzahl von axialen Zwei-Wege-Schlitzen (211) und eine Vielzahl von umlaufenden Zwei-Wege-Schlitzen (212) umfassen, wobei jeder der Vielzahl von axialen Zwei-Wege-Schlitzen (211) entsprechend mit zwei der Vielzahl von ersten Strömungskanälen (121a) in Verbindung stehen kann, die in axialer Richtung des Ventilkörpers (1) angeordnet sind, wobei jeder der Vielzahl von umlaufenden Zwei-Wege-Schlitzen (212) entsprechend mit zwei der Vielzahl von ersten Strömungskanälen (121a) in Verbindung stehen kann, die in Umfangsrichtung des Ventilkörpers (1) angeordnet sind;
wobei der erste Ventilkern (2) einen ersten fächerförmigen Abschnitt (24), einen zweiten fächerförmigen Abschnitt (25), einen dritten fächerförmigen Abschnitt (26), einen vierten fächerförmigen Abschnitt (27) und einen fünften fächerförmigen Abschnitt (28) umfasst, die einen fächerförmigen Querschnitt besitzen und sequentiell entlang einer Umfangsrichtung des ersten Ventilkerns (2) miteinander verbunden sind,
wobei ein Ende des ersten fächerförmigen Abschnitts (24) weg von dem zweiten Ventilkern (3) mit zwei der Vielzahl von umlaufenden Zwei-Wege-Schlitzen (212) versehen ist, die entlang der Umfangsrichtung des Ventilkörpers (1) verteilt sind, und das andere Ende des ersten fächerförmigen Abschnitts (24) angrenzend an den zweiten Ventilkern (3) mit einem der Vielzahl von axialen Zwei-Wege-Schlitzen (211), einer der Vielzahl von Verschlussnuten (23) und einem der Vielzahl von zweiten Kanälen (22) versehen ist, wobei der eine der Vielzahl von axialen Zwei-Wege-Schlitzen (211) sich auf einer Seite des ersten fächerförmigen Abschnitts (24) angrenzend an den zweiten fächerförmigen Abschnitt (25) befindet, wobei sowohl die eine der Vielzahl von Verschlussnuten (23) und der eine der Vielzahl von zweiten Kanälen (22) entlang der axialen Richtung des ersten Ventilkerns (2) und auf einer Seite des ersten fächerförmigen Abschnitts (24) angrenzend an den fünften fächerförmigen Abschnitt (28) gelegen sind, und wobei der eine der Vielzahl von zweiten Kanälen (22) an den zweiten Ventilkern (3) angrenzt;
wobei der zweite fächerförmige Abschnitt (25) in einer spiegelbildlichen Symmetrie zu dem ersten fächerförmigen Abschnitt (24) vorliegt;
wobei der dritte fächerförmige Abschnitt (26) mit einem der Vielzahl von axialen Zwei-Wege-Schlitzen (211), einer der Vielzahl von Verschlussnuten (23) und einem der Vielzahl von zweiten Kanälen (22) in einer Richtung von weg von dem zweiten Ventilkern (3) bis hin zu dem zweiten Ventilkern (3) versehen ist;
wobei der vierte fächerförmige Abschnitt (27) mit zwei der Vielzahl von axialen Zwei-Wege-Schlitzen (211) in Folge in einer Richtung von weg von dem zweiten Ventilkern (3) bis hin zu dem zweiten Ventilkern (3) versehen ist; und
wobei der fünfte fächerförmige Abschnitt (28) mit einem der Vielzahl von axialen Zwei-Wege-Schlitzen (211), einer der Vielzahl von Verschlussnuten (23) und einem der Vielzahl von zweiten Kanälen (22) in einer Richtung von weg von dem zweiten Ventilkern (3) bis hin zu dem zweiten Ventilkern (3) versehen ist.

5. Steuerventil (1000) nach Anspruch 1, wobei der Ventilkörper (1) einen Seitenwandabschnitt (12) und einen Befestigungsabschnitt (13) umfasst, der Seitenwandabschnitt (12) des Ventilkörpers (1) eine Seitenwand des Ventilhohlraums (11) oder wenigstens ein Teil der Seitenwand des Ventilhohlraums (11) ist, die Vielzahl von Verbindungslöchern (121) sich in dem Seitenwandabschnitt (12) des Ventilkörpers (1) befinden, eine Seite des Befestigungsabschnitts (13) des Ventilkörpers (1) fest mit dem Seitenwandabschnitt (12) des Ventilkörpers (1) verbunden ist, und die andere Seite des Befestigungabschnitts (13) des Ventilkörpers (1), weg von dem Seitenwandabschnitt (12), mit einer Befestigungsebene (131) versehen ist, und die Befestigungsebene (131) mit einer Ventilöffnung (132) versehen ist, die entsprechend mit der Vielzahl von Verbindungslöchern (121) in Verbindung steht.

6. Steuerventil (1000) nach Anspruch 5, das ferner einen Dichtungsring (4) umfasst, wobei der Dichtungsring (4) zwischen dem ersten Ventilkern (2) und dem Seitenwandabschnitt (12) des Ventilkörpers (1) angeordnet ist, der Dichtungsring (4) mit einer Kerbe (41) versehen ist, die entsprechend mit der Vielzahl von ersten Strömungskanälen (121a) in Verbindung steht, wobei eine Oberfläche des Dichtungsrings (4) in einer Dickenrichtung des Dichtungsrings (4) mit einer Oberfläche des ersten Ventilkerns (2) in Kontakt steht und dicht an dieser sitzt, und die andere Oberfläche des Dichtungsrings (4) in der Dickenrichtung des Dichtungsrings (4) dicht schließend mit einer Innenfläche des Seitenwandabschnitts (12) des Ventilkörpers (1) verbunden ist; und/oder
wobei das Steuerventil (1000) ferner einen Dichtungszylinder (5) umfasst, wobei der Dichtungszylinder (5) zwischen dem zweiten Ventilkern (3) und dem Seitenwandabschnitt (12) des Ventilkörpers (1) angeordnet ist, der Dichtungszylinder (5) entsprechend mit der Vielzahl von zweiten Strömungskanälen (121b) und dem dritten Kanal (31) in Verbindung steht, ein Ende des Dichtungszylinders (5) mit einer Außenfläche des zweiten Ventilkerns (3) in Kontakt steht und dicht an dieser sitzt, und das andere Ende des Dichtungszylinders (5) dicht schließend mit einer Innenfläche des Seitenwandabschnitts (12) verbunden ist.

7. Steuerventil (1000) nach Anspruch 1, wobei der zweite Ventilkern (3) eine Seitenplatte (32) und eine Endplatte (33) umfasst, die Seitenplatte (32) in einer Kreisform vorliegt, die Endplatte (33) an einem Ende der Seitenplatte (32) angrenzend an den ersten Ventilkern (2) angeordnet ist, und ein Aufnahmehohlraum (34) durch die Seitenplatte (32) und die Endplatte (33) gebildet wird, die diesen umgeben;
wobei die Seitenplatte (32) mit einem offenen Loch (321) versehen ist, durch das der zweite Ventilkern (3) mit der Vielzahl von zweiten Strömungskanälen (121b) in Verbindung steht, die Endplatte (33) mit einer Öffnung (331) versehen ist, durch die der zweite Ventilkern (3) mit der Vielzahl von zweiten Kanälen (22) in Verbindung steht, und der dritte Kanal (31) durch das offene Loch (321), den Aufnahmehohlraum (34) und die Öffnung (331) gebildet wird.

8. Steuerventil (1000) nach Anspruch 1, wobei das erste Sekundärzahnrad (722) ein erstes Zahnrad mit großem Durchmesser (722a) und ein erstes Zahnrad mit kleinem Durchmesser (722b) umfasst, das erste Zahnrad mit großem Durchmesser (722a) und das erste Zahnrad mit kleinem Durchmesser (722b) koaxial vorgesehen und fest verbunden sind, ein Durchmesser des ersten Zahnrads mit großem Durchmesser (722a) größer ist als der des ersten Zahnrads mit kleinem Durchmesser (722b), das erste Zahnrad mit großem Durchmesser (722a) mit dem ersten Schneckenrad (721) in Eingriff steht, das erste Zahnrad mit kleinem Durchmesser (722b) mit dem ersten Verbindungszahnrad (723) in Eingriff steht; und/oder
wobei das zweite Sekundärzahnrad (822) ein zweites Zahnrad mit großem Durchmesser (822a) und ein zweites Zahnrad mit kleinem Durchmesser (822b) umfasst, das zweite Zahnrad mit großem Durchmesser (822a) und das zweite Zahnrad mit kleinem Durchmesser (822b) koaxial vorgesehen und fest verbunden sind, ein Durchmesser des zweiten Zahnrads mit großem Durchmesser (822a) größer ist als der des zweiten Zahnrads mit kleinem Durchmesser (822b), das zweite Zahnrad mit großem Durchmesser (822a) mit dem zweiten Schneckenrad (821) in Eingriff steht, das zweite Zahnrad mit kleinem Durchmesser (822b) mit dem zweiten Verbindungszahnrad (823) in Eingriff steht.

9. Steuerventil (1000) nach Anspruch 1, das ferner ein Gehäuse (9) umfasst, wobei sowohl die erste Betätigungsanordnung (7) als auch die zweite Betätigungsanordnung (8) in dem Gehäuse (9) angeordnet sind, wobei das Gehäuse (9) mit einer Durchgangsbohrung (91) versehen ist,
wobei das erste Abtriebszahnrad (724) einen ersten Zahnradabschnitt (724a) und einen ersten Verbindungsabschnitt (724b) umfasst, der erste Zahnradabschnitt (724a) mit dem ersten Verbindungszahnrad (723) in Eingriff steht, ein Ende des ersten Verbindungsabschnitts (724b) fest mit dem ersten Zahnradabschnitt (724a) verbunden ist und das andere Ende des ersten Verbindungsabschnitts (724b) durch die Durchgangsbohrung (91) mit der ersten Getriebewelle (61) verbunden ist,
wobei das zweite Abtriebszahnrad (824) einen zweiten Zahnradabschnitt (824a) und einen zweiten Verbindungsabschnitt (824b) umfasst, der zweite Zahnradabschnitt (824a) mit dem zweiten Verbindungszahnrad (823) in Eingriff steht, ein Ende des zweiten Verbindungsabschnitts (824b) fest mit dem zweiten Zahnradabschnitt (824a) verbunden ist und das andere Ende des zweiten Verbindungsabschnitts (824b) durch die Durchgangsbohrung (91) mit der zweiten Getriebewelle (62) verbunden ist.

10. Steuerventil (1000) nach Anspruch 9, wobei ein erster Dichtungsring zwischen der ersten Getriebewelle und der Durchgangsbohrung vorgesehen ist und der erste Dichtungsring auf die erste Getriebewelle aufgeschoben ist;
und/oder wobei ein zweiter Dichtungsring zwischen dem zweiten Verbindungsabschnitt und der Durchgangsbohrung vorgesehen ist und der zweite Dichtungsring auf den zweiten Verbindungsabschnitt aufgeschoben ist.

11. Mitnehmer (60), der in einem Steuerventil enthalten ist und darin angewandt wird, wobei das Steuerventil mindestens zwei koaxial angeordnete Ventilkernanordnungen (6000) umfasst, wobei der Mitnehmer (60) ein Gehäuse (9), einen Betätigungsmechanismus (70) und mindestens zwei Abtriebsräder (4000) umfasst, wobei das Gehäuse (9) einen Hohlraum (92) umfasst, der Betätigungsmechanismus (70) und die mindestens zwei Abtriebsräder (4000) in dem Hohlraum (92) angeordnet sind, der Betätigungsmechanismus (70) mit den mindestens zwei Abtriebsrädern (4000) gekoppelt ist und dazu ausgebildet ist, die mindestens zwei Abtriebsräder (4000) in Drehung zu versetzen; **dadurch gekennzeichnet, dass**
es sich bei dem Steuerventil um das Steuerventil (1000) nach einem der Ansprüche 1 bis 10 handelt, die mindestens zwei Abtriebsräder (4000) jeweils mit den mindestens zwei Ventilkernanordnungen (6000) verbunden und koaxial darin vorgesehen sind, und die mindestens zwei Abtriebsräder (4000) in der Lage sind, unabhängig voneinander zu arbeiten und die mindestens zwei Ventilkernanordnungen (6000) jeweils in Drehung zu versetzen.

12. Mitnehmer nach Anspruch 11, wobei der Betätigungsmechanismus (70) mindestens eine zweite Motorkomponente (81) und eine zweite Reduzierkomponente (82) umfasst, die zweite Reduzierkomponente (82) mit der zweiten Motorkomponente (81) verbunden ist, die mindestens zwei Abtriebsräder (4000) ein zweites Abtriebszahnrad (824) umfassen, die zweite Reduzierkomponente (82) mit dem zweiten Abtriebszahnrad (824) verbunden ist, die zweite Motorkomponente (81) eine Ausgangsdrehzahl verringern kann und das zweite Abtriebszahnrad (824) durch die zweite Reduzierkomponente (82) in Drehung versetzen kann;
wobei der Betätigungsmechanismus (70) ferner eine erste Motorkomponente (71) und eine erste Reduzierkomponente (72) umfasst, die erste Reduzierkomponente (72) mit der ersten Motorkomponente (71) verbunden ist, die mindestens zwei Abtriebsräder (4000) ferner ein erstes Abtriebszahnrad (724) umfassen, das erste Abtriebszahnrad (724) mit der ersten Reduzierkomponente (72) verbunden ist, die erste Motorkomponente (71) eine Ausgansdrehzahl verringern kann und das erste Abtriebszahnrad (724) durch die erste Reduzierkomponente (72) in Drehung versetzen kann;
wobei die zweite Motorkomponente (81) einen zweiten Motor (811) und eine zweite Schnecke (812) umfasst, die zweite Schnecke (812) mit einer Abtriebswelle des zweiten Motors (811) verbunden ist, die zweite Reduzierkomponente (82) ein zweites Schneckenrad (821), ein zweites Sekundärzahnrad (822), ein zweites Verbindungszahnrad (823) und ein zweites Abtriebszahnrad (824) umfasst, die sequentiell miteinander in Eingriff stehen, das zweite Schneckenrad (821) mit der zweiten Schnecke (812) in Eingriff steht, das zweite Abtriebszahnrad (824) ein Kammrad ist, und das zweite Verbindungszahnrad (823) mit dem zweiten Abtriebszahnrad (824) in Eingriff steht;
wobei die erste Motorkomponente (71) einen ersten Motor (711) und eine erste Schnecke (712) umfasst, die erste Schnecke (712) mit einer Abtriebswelle des ersten Motors (711) verbunden ist, die erste Reduzierkomponente (71) ein erstes Schneckenrad (721), ein erstes Sekundärzahnrad (722), ein erstes Verbindungszahnrad (723) und ein erstes Abtriebszahnrad (724) umfasst, die sequentiell miteinander in Eingriff stehen, das erste Schneckenrad (721) mit der ersten Schnecke (712) in Eingriff steht, das erste Abtriebszahnrad (724) ein Kammrad ist, und das erste Verbindungszahnrad (723) mit dem ersten Abtriebszahnrad (724) in Eingriff steht.

13. Mitnehmer nach Anspruch 12, wobei das zweite Abtriebszahnrad (824) einen zweiten Zahnradabschnitt (824a) und einen zweiten Verbindungsabschnitt (824b) umfasst, der zweite Zahnradabschnitt (824a) mit dem zweiten Verbindungszahnrad (823) in Eingriff steht, und der zweite Verbindungsabschnitt (824b) fest mit dem zweiten Zahnradabschnitt (824a) verbunden ist;
wobei das erste Abtriebszahnrad einen ersten Zahnradabschnitt (724a) und einen ersten Verbindungsabschnitt (724b) umfasst, der erste Zahnradabschnitt (724a) mit dem ersten Verbindungszahnrad (723) in Eingriff steht, der erste Verbindungsabschnitt (724b) fest mit dem ersten Zahnradabschnitt (724a) verbunden ist; und
der zweite Zahnradabschnitt auf den ersten Verbindungsabschnitt aufgeschoben ist und durch den zweiten Verbindungsabschnitt mit dem ersten Verbindungsabschnitt verbunden ist;
wobei das zweite Sekundärzahnrad ein zweites Zahnrad mit großem Durchmesser (822a) und ein zweites Zahnrad mit kleinem Durchmesser (822b) umfasst, das zweite Zahnrad mit großem Durchmesser (822a) und das zweite Zahnrad mit kleinem Durchmesser (822b) koaxial vorgesehen und fest verbunden sind, ein Durchmesser des zweiten Zahnrads mit großem Durchmesser (822a) größer ist als der des zweiten Zahnrads mit kleinem Durchmesser (822b), das zweite Zahnrad mit großem Durchmesser (822a) mit dem zweiten Schneckenrad (821) in Eingriff steht, und das zweite Zahnrad mit kleinem Durchmesser (822b) mit dem zweiten Verbindungszahnrad (823) in Eingriff steht;
und/oder wobei das erste Sekundärzahnrad (722) ein erstes Zahnrad mit großem Durchmesser (722a) und ein erstes Zahnrad mit kleinem Durchmesser (722b) umfasst, das erste Zahnrad mit großem Durchmesser (722a) und das erste Zahnrad mit kleinem Durchmesser (722b) koaxial vorgesehen und fest verbunden sind, ein Durchmesser des ersten Zahnrads mit großem Durchmesser (722a) größer ist als der des ersten Zahnrads mit kleinem Durchmesser (722b), das erste Zahnrad mit großem Durchmesser (722a) mit dem ersten Schneckenrad (721) in Eingriff steht, und das erste Zahnrad mit kleinem Durchmesser (722b) mit dem ersten Verbindungszahnrad (723) in Eingriff steht.

## Revendications

1. Soupape de commande (1000) comprenant un corps de soupape (1) pourvu d'une cavité de soupape (11), dans laquelle une pluralité trous de communication (121) sont prévus dans une paroi latérale du corps de soupape (1), ladite pluralité de trous de communication (121) traversant la paroi latérale du corps de soupape (1) et étant en communication avec la cavité de soupape (11) ;
un premier noyau de soupape (2) est disposé de manière rotative à une extrémité de la cavité de soupape (11), le premier noyau de soupape (2) est pourvu d'une pluralité de premiers passages (21) et d'une pluralité de deuxièmes passages (22) sur un côté circonférentiel du premier noyau de soupape (2) ; et
un deuxième noyau de soupape (3) est disposé de manière rotative à l'autre extrémité de la cavité de soupape (11), et le deuxième noyau de soupape (3) est disposé coaxialement au premier noyau de soupape (2), le deuxième noyau de soupape (3) est pourvu d'un troisième passage (31) ;
la pluralité de trous de communication (121) comprend une pluralité de premiers canaux d'écoulement (121a) et une pluralité de deuxièmes canaux d'écoulement (121b) ; à condition que le premier noyau de soupape (2) soit tourné d'un premier angle prédéterminé, chacun de la pluralité de premiers passages (21) est capable d'être en communication avec deux canaux correspondants parmi la pluralité de premiers canaux d'écoulement (121a) et chacun de la pluralité de deuxièmes passages (22) est capable d'être en communication avec un canal correspondant parmi la pluralité de premiers canaux d'écoulement (121a) ;
à condition que le deuxième noyau de soupape (3) soit tourné d'un deuxième angle prédéterminé, le troisième passage (31) est capable d'être en communication avec un ou deux de la pluralité de deuxièmes canaux d'écoulement (121b) et le troisième passage (31) est capable d'être en communication de manière correspondante avec la pluralité de deuxièmes passages (22), de sorte que l'un de la pluralité de premiers canaux d'écoulement (121a) soit en communication correspondante avec un ou deux de la pluralité de deuxièmes canaux d'écoulement (121b) par l'intermédiaire de la pluralité de deuxièmes passages (22) et du troisième passage (31) ;
**caractérisé par** comprenant en outre un premier arbre de transmission (61), relié de manière fixe à un premier noyau de soupape (2) ;
un deuxième arbre de transmission (62), relié de manière fixe au deuxième noyau de soupape (3), le deuxième arbre de transmission (62) étant emmanché à l'extérieur du premier arbre de transmission (61), et le deuxième arbre de transmission (62) étant disposé de manière coaxiale par rapport au premier arbre de transmission (61) ;
un premier ensemble d'actionnement (7) couplé au premier arbre de transmission (61) afin d'entraîner le premier arbre de transmission (61) en rotation ; et
un deuxième ensemble d'actionnement (8) couplé au deuxième arbre de transmission (62) afin d'entraîner le deuxième arbre de transmission (62) en rotation ; et
le premier ensemble d'actionnement (7) comprend un premier composant moteur (71) et un premier composant réducteur (72), le premier composant réducteur (72) est relié au premier composant moteur (71) et au premier arbre de transmission (61), le premier composant moteur (71) est capable de réduire une vitesse de rotation de sortie et d'entraîner le premier arbre de transmission (61) en rotation par l'intermédiaire du premier composant réducteur (72) ;
le deuxième ensemble d'actionnement (8) comprend un deuxième composant moteur (81) et un deuxième composant réducteur (82), le deuxième composant réducteur (82) est relié au deuxième composant moteur (81) et au deuxième arbre de transmission (62), le deuxième composant moteur (81) est capable de réduire la vitesse de rotation de sortie et d'entraîner le deuxième arbre de transmission (62) en rotation par l'intermédiaire du deuxième composant réducteur (82) ;
le premier composant moteur (71) comprend un premier moteur (711) et une première vis sans fin (712), la première vis sans fin (712) est reliée à un arbre de sortie du premier moteur (711), le premier composant réducteur (71) comprend un premier pignon à vis sans fin (721), un premier pignon secondaire (722), un premier pignon de liaison (723) et un premier pignon de sortie (724) reliés en engrènement séquentiel, le premier pignon à vis sans fin (721) est en engrènement avec la première vis sans fin (712), le premier pignon de sortie (724) est serré sur une extrémité du premier arbre de transmission (61) s'étendant hors du deuxième arbre de transmission (62) ;
le deuxième composant moteur (81) comprend un deuxième moteur (811) et une deuxième vis sans fin (812), la deuxième vis sans fin (812) est reliée à un arbre de sortie du deuxième moteur (811), le deuxième composant réducteur (82) comprend un deuxième pignon à vis sans fin (821), un deuxième pignon secondaire (822), un deuxième pignon de liaison (823) et un deuxième pignon de sortie (824) reliés en engrènement séquentiel, le deuxième pignon à vis sans fin (821) est en engrènement avec la deuxième vis sans fin (812), le deuxième pignon de sortie (824) est emmanché sur une partie du premier arbre de transmission (61) s'étendant hors du deuxième arbre de transmission (62), et le deuxième pignon de sortie (824) est serré sur une extrémité du deuxième arbre de transmission (62) loin du premier noyau de soupape (2).

2. Soupape de commande (1000) selon la revendication 1, dans laquelle le nombre de la pluralité de premiers canaux d'écoulement (121a) est égal à 2n, n étant supérieur ou égal à 2, le nombre de la pluralité de deuxièmes canaux d'écoulement (121b) étant égal à 2 ;
chacun de la pluralité de premiers passages (21) est capable d'être en communication avec deux canaux d'écoulement différents parmi les premiers canaux d'écoulement (121a) afin de former un nombre de voies d'écoulement bidirectionnelles inférieur ou égal à n-1, et l'un des premiers canaux d'écoulement (121a) est capable d'être en communication avec l'un de la pluralité de deuxièmes canaux d'écoulement (121b) par l'intermédiaire d'un passage correspondant parmi les deuxièmes passages (22) et du troisième passage (31) afin de former un chemin d'écoulement bidirectionnel ;
ou bien, chacun de la pluralité de premiers passages (21) est capable d' être en communication avec deux canaux d'écoulement différents parmi la pluralité de premiers canaux d'écoulement (121a) afin de former un nombre inférieur ou égal à n-1 de voies d'écoulement bidirectionnelles, et l'un de la pluralité de premiers canaux d'écoulement (121a) est capable d'être en communication avec deux de la pluralité de deuxièmes canaux d'écoulement (121b) par l'intermédiaire de l'un correspondant de la pluralité de deuxièmes passages (22) et du troisième passage (31) afin de former un chemin d'écoulement à trois voies.

3. Soupape de commande (1000) selon la revendication 2, dans laquelle la pluralité de trous de communication (121) est répartie en deux rangées dans le corps de soupape, chaque rangée de la pluralité de trous de communication (121) comprend n de la pluralité de premiers canaux d'écoulement (121a) et un de la pluralité de deuxièmes canaux d'écoulement (121b), et dans laquelle deux de la pluralité de deuxièmes canaux d'écoulement (121b) correspondant à deux rangées sont disposés à la même extrémité du corps de soupape (1).

4. Soupape de commande (1000) selon la revendication 1, dans laquelle le premier noyau de soupape (2) présente une structure colonnaire, le premier noyau de soupape (2) est pourvu d'une pluralité de rainures de fermeture (23), chacune de la pluralité de rainures de fermeture (23) est capable de fermer l'un des premiers canaux d'écoulement (121a) correspondants, la pluralité de premiers passages (21) comprend une pluralité de fentes axiales bidirectionnelles (211) et une pluralité de fentes circonférentielles bidirectionnelles (212) ; chacune des fentes axiales bidirectionnelles (211) est capable d'être en communication de manière correspondante avec deux de la pluralité de premiers canaux d'écoulement (121a) disposés dans une direction axiale du corps de soupape (1), chacune de la pluralité de fentes circonférentielles bidirectionnelles (212) est capable d'être en communication, de manière correspondante, avec deux de la pluralité de premiers canaux d'écoulement (121a) disposés dans une direction circonférentielle du corps de soupape (1) ;
le premier noyau de soupape (2) comprend une première section en forme d'éventail (24), une deuxième section en forme d'éventail (25), une troisième section en forme d'éventail (26), une quatrième section en forme d'éventail (27) et une cinquième section en forme d'éventail (28), présentant chacune une section transversale en forme d'éventail et reliées les unes aux autres de manière séquentielle dans une direction circonférentielle du premier noyau de soupape (2) ;
une extrémité de la première section en forme d'éventail (24), loin du deuxième noyau de soupape (3), est pourvue de deux de la pluralité de fentes bidirectionnelles circonférentielles (212) réparties le long de la direction circonférentielle du corps de soupape (1), et l'autre extrémité de la première section en forme d'éventail (24), adjacente au deuxième noyau de soupape (3), est pourvue d'une de la pluralité de fentes axiales bidirectionnelles (211), d'une de la pluralité de rainures de fermeture (23), et l'un de la pluralité de deuxièmes passages (22), dans laquelle l'une de la pluralité de fentes bidirectionnelles axiales (211) est située sur un côté de la première section en forme d'éventail (24) adjacent à la deuxième section en forme d'éventail (25), l'une de la pluralité de rainures de fermeture (23) et l'un de la pluralité de deuxièmes passages (22) sont tous deux situés dans la direction axiale du premier noyau de soupape (2) et sur un côté de la première section en forme d'éventail (24) adjacent à la cinquième section en forme d'éventail (28), et l'un de la pluralité de deuxièmes passages (22) est adjacent au deuxième noyau de soupape (3) ;
la deuxième section en forme d'éventail (25) présente une symétrie en miroir par rapport à la première section en forme d'éventail (24) ;
la troisième section en forme d'éventail (26) est pourvue de l'une de la pluralité de fentes axiales bidirectionnelles (211), de l'une de la pluralité de rainures de fermeture (23) et de l'un de la pluralité de deuxièmes passages (22), dans une direction allant du deuxième noyau de soupape (3) vers l'extérieur jusqu'au deuxième noyau de soupape (3) ;
la quatrième section en forme d'éventail (27) est pourvue de deux de la pluralité de fentes axiales bidirectionnelles (211), disposées séquentiellement dans une direction allant du deuxième noyau de soupape (3) vers l'extérieur jusqu'au deuxième noyau de soupape (3) ; et
la cinquième section en forme d'éventail (28) est pourvue de l'une de la pluralité de fentes axiales bidirectionnelles (211), de l'une de la pluralité de rainures de fermeture (23) et de l'un de la pluralité de deuxièmes passages (22), dans une direction allant du deuxième noyau de soupape (3) vers l'extérieur jusqu'au deuxième noyau de soupape (3).

5. Soupape de commande (1000) selon la revendication 1, dans laquelle le corps de soupape (1) comprend une partie de paroi latérale (12) et une partie de montage (13), la partie de paroi latérale (12) du corps de soupape (1) est une paroi latérale de la cavité de soupape (11) ou au moins une partie de la paroi latérale de la cavité de soupape (11), la pluralité de trous de communication (121) est située dans la partie de paroi latérale (12) du corps de soupape (1), un côté de la partie de montage (13) du corps de soupape (1) est relié de manière fixe à la partie de paroi latérale (12) du corps de soupape (1), et l'autre côté de la partie de montage (13) du corps de soupape (1), loin de la partie de paroi latérale (12), est pourvu d'un plan de montage (131), et le plan de montage (131) est pourvu d'un orifice de soupape (132) communiquant de manière correspondante avec la pluralité de trous de communication (121).

6. Soupape de commande (1000) selon la revendication 5, comprenant en outre un joint d'étanchéité (4), dans laquelle le joint d'étanchéité (4) est disposé entre le premier noyau de soupape (2) et la partie de paroi latérale (12) du corps de soupape (1), le joint d'étanchéité (4) est pourvu d'une encoche (41) communiquant de manière correspondante avec la pluralité de premiers canaux d'écoulement (121a), une surface du joint d'étanchéité (4), dans une direction de l'épaisseur du joint d'étanchéité (4), est en contact et en ajustement étanche avec une surface du premier noyau de soupape (2), et l'autre surface du joint d'étanchéité (4), dans la direction de l'épaisseur du joint d'étanchéité (4), est reliée de manière étanche à une surface intérieure de la partie de paroi latérale (12) du corps de soupape (1) ; et/ou
la soupape de commande (1000) comprend en outre un cylindre d'étanchéité (5), dans laquelle le cylindre d'étanchéité (5) est disposé entre le deuxième noyau de soupape (3) et la partie de paroi latérale (12) du corps de soupape (1), le cylindre d'étanchéité (5) est en communication, de manière correspondante, avec la pluralité de deuxièmes canaux d'écoulement (121b) et le troisième passage (31), une extrémité du cylindre d'étanchéité (5) est en contact avec une surface extérieure du deuxième noyau de soupape (3) et s'y adapte de manière étanche, et l'autre extrémité du cylindre d'étanchéité (5) est reliée de manière étanche à une surface intérieure de la partie de paroi latérale (12).

7. Soupape de commande (1000) selon la revendication 1, dans laquelle le deuxième noyau de soupape (3) comprend une plaque latérale (32) et une plaque d'extrémité (33), la plaque latérale (32) est de forme circulaire, la plaque d'extrémité (33) est disposée à une extrémité de la plaque latérale (32), adjacente au premier noyau de soupape (2), et une cavité de logement (34) est formée par la plaque latérale (32) et la plaque d'extrémité (33) qui l'entourent ;
la plaque latérale (32) est pourvue d'un trou ouvert (321) à travers lequel le deuxième noyau de soupape (3) est en communication avec la pluralité de deuxièmes canaux d'écoulement (121b), la plaque d'extrémité (33) est pourvue d'une ouverture (331) à travers laquelle le deuxième noyau de soupape (3) est en communication avec la pluralité de deuxièmes passages (22), et le troisième passage (31) est formé par le trou ouvert (321), la cavité de logement (34) et l'ouverture (331).

8. Soupape de commande (1000) selon la revendication 1, dans laquelle le premier pignon secondaire (722) comprend un premier pignon de grand diamètre (722a) et un premier pignon de petit diamètre (722b), le premier pignon de grand diamètre (722a) et le premier pignon de petit diamètre (722b) sont disposés de manière coaxiale et reliés de manière fixe, un diamètre du premier pignon de grand diamètre (722a) est supérieur à celui du premier pignon de petit diamètre (722b), le premier pignon de grand diamètre (722a) est en prise avec le premier pignon à vis sans fin (721), le premier pignon de petit diamètre (722b) est en prise avec le premier pignon de liaison (723) ; et/ou
le deuxième pignon secondaire (822) comprend un deuxième pignon de grand diamètre (822a) et un deuxième pignon de petit diamètre (822b), le deuxième pignon de grand diamètre (822a) et le deuxième pignon de petit diamètre (822b) sont disposés de manière coaxiale et reliés de manière fixe, un diamètre du deuxième pignon de grand diamètre (822a) est supérieur à celui du deuxième pignon de petit diamètre (822b), le deuxième pignon de grand diamètre (822a) est en prise avec le deuxième pignon à vis sans fin (821), le deuxième pignon de petit diamètre (822b) est en prise avec le deuxième pignon de liaison (823).

9. Soupape de commande (1000) selon la revendication 1, comprenant en outre un boîtier (9), dans laquelle le premier ensemble d'actionnement (7) et le deuxième ensemble d'actionnement (8) sont tous deux disposés dans le boîtier (9), le boîtier (9) étant pourvu d'un trou de transmission (91),
le premier pignon de sortie (724) comprend une première partie de pignon (724a) et une première partie de liaison (724b), la première partie de pignon (724a) est en prise avec le premier pignon de liaison (723), une extrémité de la première partie de liaison (724b) est reliée de manière fixe à la première partie de pignon (724a) et l'autre extrémité de la première partie de liaison (724b) est reliée au premier arbre de transmission (61) par l'intermédiaire du trou de transmission (91),
le deuxième pignon de sortie (824) comprend une deuxième partie de pignon (824a) et une deuxième partie de liaison (824b), la deuxième partie de pignon (824a) est en prise avec le deuxième pignon de liaison (823), une extrémité de la deuxième partie de liaison (824b) est reliée de manière fixe à la deuxième partie de pignon (824a) et l'autre extrémité de la deuxième partie de liaison (824b) est reliée au deuxième arbre de transmission (62) par l'intermédiaire du trou de transmission (91).

10. Soupape de commande (1000) selon la revendication 9, dans laquelle une première bague d'étanchéité est prévue entre le premier arbre de transmission et le trou de transmission, et la première bague d'étanchéité est emmanchée sur le premier arbre de transmission ;
et/ou, une deuxième bague d'étanchéité est prévue entre la deuxième partie de liaison et le trou de transmission, et la deuxième bague d'étanchéité est emmanchée sur la deuxième partie de liaison.

11. Dispositif d'entraînement (60), intégré et utilisé dans une soupape de commande, dans lequel la soupape de commande comprend au moins deux ensembles de noyaux de soupape (6000) disposés de manière coaxiale, le dispositif d'entraînement (60) comprend un boîtier (9), un mécanisme d'actionnement (70) et au moins deux roues de sortie (4000), le boîtier (9) comprend une cavité (92), le mécanisme d'actionnement (70) et les au moins deux roues de sortie (4000) sont disposés dans la cavité (92), le mécanisme d'actionnement (70) est couplé aux au moins deux roues de sortie (4000) et est configuré pour entraîner les au moins deux roues de sortie (4000) en rotation ; **caractérisé en ce que**
la soupape de commande est la soupape de commande (1000) selon l'une quelconque des revendications 1 à 10, les au moins deux roues de sortie (4000) sont respectivement reliées aux au moins deux ensembles de noyaux de soupape (6000) et disposées coaxialement en correspondance avec les au moins deux ensembles de noyaux de soupape (6000), et les au moins deux roues de sortie (4000) sont capables de fonctionner indépendamment et d'entraîner les au moins deux ensembles de noyaux de soupape (6000) à tourner respectivement.

12. Dispositif d'entraînement selon la revendication 11, dans lequel le mécanisme d'actionnement (70) comprend au moins un deuxième composant moteur (81) et un deuxième composant réducteur (82), le deuxième composant réducteur (82) est relié au deuxième composant moteur (81), les au moins deux roues de sortie (4000) comprennent un deuxième pignon de sortie (824), le deuxième composant réducteur (82) est relié au deuxième pignon de sortie (824), le deuxième composant moteur (81) est capable de réduire une vitesse de rotation de sortie et d'entraîner le deuxième pignon de sortie (824) en rotation par l'intermédiaire du deuxième composant réducteur (82) ;
le mécanisme d'actionnement (70) comprend en outre un premier composant moteur (71) et un premier composant réducteur (72), le premier composant réducteur (72) est relié au premier composant moteur (71), les au moins deux roues de sortie (4000) comprennent en outre un premier pignon de sortie (724), le premier pignon de sortie (724) est relié au premier composant réducteur (72), le premier composant moteur (71) est capable de réduire une vitesse de rotation de sortie et d'entraîner le premier pignon de sortie (724) en rotation par l'intermédiaire du premier composant réducteur (72) ;
le deuxième composant moteur (81) comprend un deuxième moteur (811) et une deuxième vis sans fin (812), la deuxième vis sans fin (812) est reliée à un arbre de sortie du deuxième moteur (811), le deuxième composant réducteur (82) comprend un deuxième pignon à vis sans fin (821), un deuxième pignon secondaire (822), un deuxième pignon de liaison (823) et un deuxième pignon de sortie (824) reliés en engrènement séquentiel, le deuxième pignon à vis sans fin (821) est en engrènement avec la deuxième vis sans fin (812), le deuxième pignon de sortie (824) est une roue dentée, et le deuxième pignon de liaison (823) est en prise avec le deuxième pignon de sortie (824) ;
le premier composant moteur (71) comprend un premier moteur (711) et une première vis sans fin (712), la première vis sans fin (712) est reliée à un arbre de sortie du premier moteur (711), le premier composant réducteur (71) comprend un premier pignon à vis sans fin (721), un premier pignon secondaire (722), un premier pignon de liaison (723) et un premier pignon de sortie (724) reliés en engrènement séquentiel, le premier pignon à vis sans fin (721) est en engrènement avec la première vis sans fin (712), le premier pignon de sortie (724) est une roue dentée, et le premier pignon de liaison (723) est en engrènement avec le premier pignon de sortie (724).

13. Dispositif d'entraînement selon la revendication 12, dans lequel le deuxième pignon de sortie (824) comprend une deuxième partie de pignon (824a) et une deuxième partie de liaison (824b), la deuxième partie de pignon (824a) est en prise avec le deuxième pignon de liaison (823), et la deuxième partie de liaison (824b) est reliée de manière fixe à la deuxième partie de pignon (824a) ;
le premier pignon de sortie comprend une première partie de pignon (724a) et une première partie de liaison (724b), la première partie de pignon (724a) est en prise avec le premier pignon de liaison (723), la première partie de liaison (724b) est reliée de manière fixe à la première partie de pignon (724a) ; et
la deuxième partie de pignon est emmanchée sur et reliée à la première partie de liaison par l'intermédiaire de la deuxième partie de liaison ;
le deuxième pignon secondaire (822) comprend un deuxième pignon de grand diamètre (822a) et un deuxième pignon de petit diamètre (822b), le deuxième pignon de grand diamètre (822a) et le deuxième pignon de petit diamètre (822b) sont disposés de manière coaxiale et reliés de manière fixe, un diamètre du deuxième pignon de grand diamètre (822a) est supérieur à celui du deuxième pignon de petit diamètre (822b), le deuxième pignon de grand diamètre (822a) est en prise avec le deuxième pignon à vis sans fin (821), et le deuxième pignon de petit diamètre (822b) est en prise avec le deuxième pignon de liaison (823) ;
et/ou, le premier pignon secondaire (722) comprend un premier pignon de grand diamètre (722a) et un premier pignon de petit diamètre (722b), le premier pignon de grand diamètre (722a) et le premier pignon de petit diamètre (722b) sont disposés de manière coaxiale et reliés de manière fixe, un diamètre du premier pignon de grand diamètre (722a) est supérieur à celui du premier pignon de petit diamètre (722b), le premier pignon de grand diamètre (722a) est en prise avec le premier pignon à vis sans fin (721), et le premier pignon de petit diamètre (722b) est en prise avec le premier pignon de liaison (723).
